(19) Europäisches Patentamt
European Patent Office
Office européen des brevets

(11) EP 3 375 931 B1

(12) **EUROPÄISCHE PATENTSCHRIFT**

(45) Veröffentlichungstag und Bekanntmachung des Hinweises auf die Patenterteilung:
**16.10.2019 Patentblatt 2019/42**

(51) Int Cl.:
***D06F 58/28*** *(2006.01)*

(21) Anmeldenummer: **18161000.7**

(22) Anmeldetag: **09.03.2018**

(54) **HAUSHALTSGERÄT MIT EINER TROCKNUNGSFUNKTION UND MIT EINER VORRICHTUNG ZUR ERFASSUNG EINER FEUCHTE, SOWIE VERFAHREN ZUM ERFASSEN EINER FEUCHTE**

HOUSEHOLD DEVICE WITH A DRYING FUNCTION AND WITH A DEVICE FOR RECORDING A HUMIDITY LEVEL AND METHOD FOR RECORDING A HUMIDITY LEVEL

APPAREIL ÉLECTROMÉNAGER POURVU D'UNE FONCTION DE SÉCHAGE ET D'UN DISPOSITIF DE DÉTECTION D'UNE HUMIDITÉ AINSI QUE PROCÉDÉ DE DÉTECTION DE L'HUMIDITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.03.2017 DE 102017204366**

(43) Veröffentlichungstag der Anmeldung:
**19.09.2018 Patentblatt 2018/38**

(73) Patentinhaber: **BSH Hausgeräte GmbH
81739 München (DE)**

(72) Erfinder:
- **Guijarro Reznickova, Jarmila
10439 Berlin (DE)**
- **Nitschmann, Kai
15366 Neuenhagen (DE)**
- **Popescu, Alexandru
81673 München (DE)**

(56) Entgegenhaltungen:
**JP-A- H1 090 171 JP-B2- 3 702 529**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Haushaltsgerät mit einer Trocknungsfunktion und mit einer Vorrichtung zur Erfassung einer Feuchte von in dem Haushaltsgerät anordenbaren zu trocknenden Gegenständen sowie ein Haushaltsgerät mit einer Trocknungsfunktion und mit einer Vorrichtung zur Erfassung einer Art von in dem Haushaltsgerät anordenbaren zu trocknenden Gegenständen und ein Verfahren zur Erfassung einer Feuchte und/oder zur Erfassung einer Art von in dem Haushaltsgerät anordenbaren zu trocknenden Gegenständen.

In Haushaltsgeräten, wie beispielsweise einem Waschtrockner, einem Trockner oder einer Spülmaschine oder Geschirrspüler, werden Gegenstände wie Wäsche oder Geschirr nach ihrer Reinigung einem Trocknungsprozess unterzogen. Um festzustellen, ob ein Trocknungsprozess in dem entsprechenden Haushaltsgerät erfolgreich war, ist bekannt, ein Impedanz-Messverfahren durchzuführen, welches kontaktbasiert die mit sinkender Feuchte steigende Impedanz misst. Ferner existieren Lösungsvorschläge, die mittels Temperaturerfassung über Wärmestrahlung eine Korrelation zur Feuchte der zu trocknenden Gegenstände herstellt.

Beispielsweise in einem Wäschetrockner wird ein Verfahren zur Bestimmung des Feuchtigkeitsgehaltes der zu trocknenden Gegenstände eingesetzt, um Wäsche auf bestimmte Trocknungsstufen zu trocknen. Dabei wird in den meisten Fällen zwischen "bügelfeucht", "schranktrocken" und "extra trocken" unterschieden, was z. B. entsprechend einer relativen Feuchte von 12 %, 0 % und -3 % Gew.-% gemäß DIN-Norm EN 61121/2012 entspricht. Ferner ist auch die Trocknung anderer Güter von Bedeutung. Beispielsweise erfolgt bei einem Geschirrspüler nach dem Spülvorgang eine Trocknungsphase. Diese sollte erst dann beendet werden, wenn das Geschirr vollständig getrocknet ist. Sowohl unterschiedliche Materialien der zu trocknenden Gegenstände, wie beispielsweise unterschiedliche Textilien (Baumwolle, Wolle, Synthetik etc.), als auch unterschiedliche Materialien des Geschirrs (Keramik, Glas, Plastik, etc.) unterliegen unterschiedlichen Trocknungszeiten. Um festzustellen, ob die zu trocknenden Güter den voreingestellten Feuchtegehalt erreicht haben, ist ein Sensor notwendig, der die relative Feuchte dieser Güter bestimmt. Ein Trocknungsprozess kann dann bei Erreichen der voreingestellten Feuchte abgebrochen werden.

Ein Haushaltsgerät mit den Merkmalen des Oberbegriffs des Anspruchs 1, ist aus JPH 10 90171 bekannt.

DE 10 2010 017 232 A1 beschreibt ein Betriebsverfahren für einen Wäschetrockner, bei dem auf Basis einer Charakteristik des Trockengutes mittels eines Infrarotsensors die Temperatur des Trockengutes feststellt wird. Hierzu werden mehrere zeitlich verteilte Temperaturmessungen in der Trommel des Wäschetrockners während dessen Umlauf festgestellt.

WO 2007/057360 A1 beschreibt einen Trockner zum Trocknen mindestens eines Gegenstandes, wobei der Trockner ein infrarotsensitives Messelement zur berührungslosen spektroskopischen Messung der Oberflächentemperatur des in dem Trockenraum vorgesehenen Objektes und zur Ausgabe eines Oberflächen-Temperatursignals umfasst. Der Feuchtegrad der zu trocknende Objekte wird kontaktlos durch Detektion der von Ihnen ausgesandten Wärmestrahlung im Infrarotbereich ermittelt. Die Wärmestrahlung der zu trocknenden Gegenstände wird in optischen Fenstern gemessen, in denen keine Absorption durch den Wasserdampf im Trockenraum stattfindet.

In aus dem Stand der Technik bekannten Verfahren wird also die Temperatur der zu trocknenden Gegenstände im Verlaufe der Zeit erfasst. Auf Basis der erfassten Temperatur wird dann ein Rückschluss darauf gezogen, ob die zu trocknenden Gegenstände erfolgreich getrocknet worden sind oder nicht.

Abhängig von der Art des zu trocknenden Gegenstandes, insbesondere bei verschiedenen Arten von zu trocknenden Gegenständen, kann es zu einem fehlerhaften Trocknungsergebnis kommen. Verschiedene Arten von zu trocknenden Gegenständen weisen bekanntlich unterschiedliche Trocknungs-Charakteristiken auf, d. h. verschiedene Arten von zu trocknenden Gegenständen benötigen unterschiedlich lange Zeit, bis der Trocknungsprozess erfolgreich durchgeführt ist.

Angesichts des soeben geschilderten Problems ist die Aufgabe der vorliegenden Erfindung, ein Haushaltsgerät bereitzustellen, mit welchem die Erfassung der aktuellen Feuchte der zu trocknenden Gegenstände in einem Haushaltsgerät verbessert ist. Ferner ist es die Aufgabe der vorliegenden Erfindung, ein Haushaltsgerät bereitzustellen, welches die Art der zu trocknenden Gegenstände erfasst. Ferner ist es die Aufgabe der vorliegenden Erfindung, ein Verfahren zur Erfassung einer aktuellen Feuchte und/oder zur Erfassung einer Art von der in dem Haushaltsgerät anordenbaren zu trocknenden Gegenständen bereitzustellen.

Diese Aufgaben werden gelöst mit einem Haushaltsgerät sowie einem Verfahren zur Erfassung einer aktuellen Feuchte und/oder zur Erfassung einer Art von in dem Haushaltsgerät anordenbaren zu trocknenden Gegenständen gemäß jeweiligem unabhängigem Patentanspruch. Weitere Vorteile und bevorzugte fakultative Merkmale der vorliegenden Erfindung ergeben sich aus den abhängigen Patentansprüchen, nachfolgender Beschreibung und beigefügter Zeichnung. Bevorzugte Weiterbildungen des erfindungsgemäßen Haushaltsgeräts entsprechen bevorzugten Weiterbildungen des erfindungsgemäßen Verfahrens und umgekehrt im Sinne des technisch Möglichen, und dies auch dann, wenn darauf hierin nicht explizit hingewiesen ist.

Erfindungsgemäß weist demnach das Haushaltsgerät eine Trocknungsfunktion und eine Vorrichtung zur Erfassung einer Feuchte von in dem Haushaltsgerät anordenbaren zu trocknenden Gegenständen einen Behälter zum Aufnehmen der zu trocknenden Gegenstände auf. Ferner weist das Haushaltsgerät mindestens einen Sensor zur Erfassung eines Messsignals in Form mindestens einer von den zu trocknenden Gegenständen reflektierten Lichtintensität und eine Steuerung auf, welche mit dem mindestens einem Sensor verbunden ist und in welcher mindestens eine Referenzkennlinie gespeichert ist. Vorschlagsgemäß ist der Sensor derart konfiguriert, in einer Wasserabsorptionsbande entsprechend einem Wellenlängenbereich, in welchem Wasser Licht absorbiert, ein erstes Messsignal I zu erfassen und mindestens ein zweites Messsignal in einem anderen Wellenlängenbereich außerhalb einer Wasserabsorptionsbande zu erfassen, welches eine reflektierte Lichtintensität $I_{02}$, $I_{03}$ aufweist. Ferner ist der Sensor derart konfiguriert, die erfassten Messsignale an die Steuerung zu geben, wobei die Steuerung wiederum dazu konfiguriert ist, auf Basis des ersten und des mindestens einen zweiten Messsignals und auf Basis der gespeicherten Referenzkennlinie die Feuchte der zu trocknenden Gegenstände in dem Behälter zu bestimmen. Der mindestens eine Sensor erfasst eine von den zu trocknenden Gegenständen reflektierte Lichtintensität, wobei das erste Messsignal eine reduzierte reflektierte Lichtintensität, insbesondere innerhalb einer Wasserabsorptionsbande, aufweist und ein zweites Messsignal eine reflektierte Lichtintensität, insbesondere außerhalb einer Wasserabsorptionsbande, aufweist. Die Lichtintensitätsmessungen werden folglich bei mindestens zwei unterschiedlichen Wellenlängen bzw. in zwei unterschiedlichen Wellenlängenbereichen um mindestens zwei unterschiedliche Wellenlängen herum aufgenommen. Hierbei entspricht eine Wellenlänge einer Absorptionslinie von Wasser, bei welcher insbesondere die reduzierte reflektierte Lichtintensität erfasst wird, und eine andere Wellenlägen entspricht gerade keiner Absorptionslinie von Wasser, bei welcher insbesondere die reflektierte Lichtintensität erfasst wird. Die die reflektierte Lichtintensität $I_{02}$, $I_{03}$ bei der anderen Wellenlänge $\lambda_{02}$, $\lambda_{03}$ wird dazu verwendet, um näherungsweise eine nicht-reduzierte Lichtintensität $I_0$ bei der einen Wellenlänge $\lambda$ zu bestimmen. Der Sensor ist konfiguriert, das erste Messsignal und das zweite Messsignal, insbesondere zeitgleich oder möglichst schnell hintereinander, zu erfassen. Dies hat den Vorteil, dass reflektiertes Licht von demselben zu trocknenden Gegenstand der in dem Haushaltsgerät angeordneten zu trocknenden Gegenstände erfasst wird. Zur Auswertung der erfassten reduzierten reflektierten Lichtintensität und der erfassten reflektierten Lichtintensität wird z.B. das Lambert-Beersche Gesetz verwendet, welches die Abschwächung der Lichtintensität einer Strahlung bei dem Durchgang durch ein Medium mit einer absorbierenden Substanz in Abhängigkeit von der Konzentration der absorbierenden Substanz und der Schichtdicke beschreibt. Das Lambert-Beersche Gesetz lässt sich schreiben als $I / I_0 = e^{-(n \sigma 2d)}$, wobei d die Schichtdicke der Wasserschicht ist, $\sigma$ einen Absorptionskoeffizienten wiedergibt, welcher Wellenlängen-abhängig ist, und n eine Stoffmengenkonzentration der absorbierenden Substanz wiedergibt. Vorliegend ist die absorbierenden Substanz Wasser bzw. die Schichtdicke eine die zu trocknenden Gegenstände umgebende Wasserschicht. Zur Kalibrierung der erfassten Lichtintensitäten gemäß dem Lambert-Beerschen Gesetz ist werksseitig mindestens eine Referenzkennlinie in der Steuerung hinterlegt. Die mindestens eine Referenzkennlinie wurde dabei mittels einer Waage erfasst, indem parallel zur Erfassung von reflektierten reduzierten und reflektierten nichtreduzierten Lichtintensitäten die relative Feuchte der zu trocknenden Gegenstände mit einer Waage erfasst wurde. Mit dieser Referenzkennlinie wird folglich ermöglicht, dass die Feuchte der zu trocknenden Gegenstände in dem Haushaltsgerät während eines Trocknungsprozesses durch Vergleich der Referenzkennlinien und der mittels des Lambert-Beerschen Gesetzes bestimmten Lichtintensitätsverhältnisse bestimmt werden kann. Es wurde festgestellt, dass durch Erfassung der reduzierten reflektierten und der reflektierten Lichtintensität von den zu trocknenden Gegenständen und durch einen Vergleich mit der hinterlegten Referenzkennlinie auf die Feuchte der zu trocknenden Gegenstände in dem Haushaltsgerät geschlossen werden kann, welches nachfolgend noch beschrieben werden wird. Dies hat den Vorteil, dass während des Betriebes des Haushaltsgeräts die Feuchte der zu trocknenden Gegenstände fortlaufend bestimmt und damit überwacht werden kann.

Gemäß einer Ausführungsform ist der Sensor als ein insbesondere Licht emittierender Lichtsensor, insbesondere als ein Infrarotsensor, oder als eine Anordnung, welche Photodioden, insbesondere mindestens drei LEDs, oder eine Lichtquelle und/oder spektrale Filter umfasst, ausgebildet. Vorschlagsgemäß ist der Sensor also ein Lichtsensor, mit dem reflektierte Strahlung erfasst werden kann. Insbesondere handelt es sich bei dem Lichtsensor um einen Infrarotsensor, welcher bevorzugt Wellenlängen im Bereich von 750 nm bis 3000 nm erfassen kann. Alternativ kann der Sensor als eine Anordnung ausgebildet sein, welche Photodioden, vorzugsweise mindestens drei LEDs, oder eine Lichtquelle, welche auf unterschiedlichen Wellenlängen abstrahlt, ausgebildet sein. Die Anordnung umfasst bevorzugt spektrale Filter, welche für die zu erfassenden Wellenlängen durchgängig sind, während sie andere Wellenlängen ausfiltern. Dies hat den Vorteil, dass nur bestimmte Wellenlängen den Sensor erreichen, wodurch das Signal zu Geräuschverhältnis der erfassten reflektieren Lichtintensität reduziert ist. Ferner umfasst der Sensor eine Lichtquelle, insbesondere Photodioden oder eine Lichtquelle anderer Art, welche Licht emittiert, mit welchem die zu trocknenden Gegenstände bestrahlt werden können. Die gemessenen reflektierten reduzierten und reflektierten Lichtintensitäten werden vor ihrer Detektion vom Sensor emittiert. Insbesondere sind LEDs oder mit einem Filter versehene Lichtquellen sogenannte Punktlichtquellen, welche bevorzugt auf einer Wellenlänge Licht emittieren. Bei der Verwendung von drei LEDs beispielsweise kann eine LED Licht bei einer Wellenlänge emittieren, bei der Wasser absorbiert, und die beiden weiteren LEDs könnten jeweils bei einer Wellenlänge emittieren, bei der Wasser im Wesentlichen nicht absorbiert.

Bevorzugt ist der Sensor zur zeitgleichen oder zur hintereinander folgenden Erfassung des ersten und des mindestens einen zweiten Messsignals ausgebildet. Die reflektierte reduzierte Lichtintensität und die reflektierte Lichtintensität werden folglich zeitgleich oder schnell hintereinander vom Sensor detektiert, wodurch die Erfassung der reflektierten Lichtintensität von ein und demselben zu trocknenden Gegenstand rührt. Hierdurch kann das Lambert-Beersche Gesetz zur Auswertung der Feuchte in den zu trocknenden Gegenständen herangezogen werden kann. Bevorzugt wird die Erfassung des ersten und des mindestens einen zweiten Messsignals, d.h. die Erfassung der Lichtintensitäten, widerholt durchgeführt, z. B. mit einer Aufnahmerate von wenigen Millisekunden, so dass das Lambert-Beersche Gesetz zur Auswertung der Feuchte wiederholt, insbesondere während des gesamten Trocknungsprozesses, angewendet wird. Insbesondere bei Verwendung von drei LEDs werden das erste und mindestens zwei zweite Messsignale hintereinander erfasst. Hierdurch kann einer Wellenlänge einer LED ein vom Sensor erfasstes Messsignal, insbesondere zeitaufgelöst, zugeordnet werden, indem eine Taktung der LEDs mit der zeitlichen Erfassung der Messsignale korreliert wird. Bevorzugt werden die Lichtintensitäten zu Beginn eines Trocknungsprozesses so schnell wie möglich, insbesondere mit einer Aufnahmerate im Millisekunden-Bereich, wiederholt erfasst, um die Feuchte der zu trocknenden Gegenstände möglichst genau zu bestimmen. Ferner bevorzugt werden an einem Ende eines Trocknungsprozesses die Lichtintensitäten weniger oft erfasst, z. B. beträgt der zeitliche Abstand zur Erfassung der Lichtintensitäten nicht mehr als 1 Sekunde. Die Erfassung des ersten und des mindestens einen zweiten Messsignals erfolgt auch an einem Ende des Trocknungsprozesses zeitgleich oder so schnell wie möglich hintereinander, wobei die Wiederholung zur Erfassung des ersten und des mindestens einen zweiten Messsignals an einem Ende des Trocknungsprozesses langsamer erfolgen kann als zu Beginn des Trocknungsprozesses, beispielsweise in einem zeitlichen Abstand von nicht mehr als einer Sekunde.

Gemäß einer bevorzugten Ausführungsform erfasst der Sensor bei vorbestimmten Wellenlängen $\lambda$, $\lambda_{02}$, $\lambda_{03}$ jeweils ein Messsignal. Insbesondere erfasst der Sensor bei einer Absorptions- und/oder Emissionswellenlänge von Wasser eine reduzierte reflektierte Lichtintensität (I) und bei mindestens einer Wellenlänge mindestens eine reflektierte Lichtintensität ($I_{02}$, $I_{03}$), aus welcher näherungsweise eine nicht-reduzierte reflektierte Lichtintensität $I_0$ bei der Wellenlänge $\lambda$ bestimmt wird. Insbesondere werden die Lichtintensitäten bei Wellenlängen des Infraroten Lichtes vom Sensor detektiert. Bevorzugt werden Lichtintensitäten in einem Wellenlängenbereich zwischen 900 nm und 2000 nm detektiert. Bei den vorbestimmten Wellenlängen $\lambda$, $\lambda_{02}$, $\lambda_{03}$ handelt es sich um Wellenlängen, bei welchen Wasser absorbiert, bzw. bei welchen Wasser gerade nicht absorbiert wird. Die Erfassung der Lichtintensität bei mindestens zweier solcher Wellenlängen ermöglicht es, das Lambert-Beersche Gesetz auszunutzen, um Rückschlüsse auf die Feuchte der zu trocknenden Gegenstände zu schließen.

Bevorzugt erfasst der Sensor, insbesondere zeitgleich, mindestens zwei, bevorzugte drei, Lichtintensitäten I, $I_{02}$, $I_{03}$, wobei jede Lichtintensität einer Wellenlänge $\lambda$, $\lambda_{02}$, $\lambda_{03}$ in jeweils einem Wellenlängenbereich $\Delta\lambda$, $\Delta\lambda_{02}$, $\Delta\lambda_{03}$ zugeordnet ist. Die Wellenlänge $\lambda$, $\lambda_{02}$, $\lambda_{03}$ bildet jeweils ein Zentrum eines von dem Sensor erfassten Wellenlängenbereiches $\Delta\lambda$, $\Delta\lambda_{02}$, $\Delta\lambda_{03}$. Die erfassten reflektierten Lichtintensitäten werden folglich auf Wellenlängenbereichen um jeweils eine Wellenlänge erfasst. Dies ermöglicht, die reflektierte Lichtintensität, welche zu einer Wellenlänge gehört, nahezu vollständig zu erfassen.

Für die vorbestimmte Wellenlänge $\lambda$, bei welcher eine reduzierte reflektierte Lichtintensität I erfasst ist, und für die vorbestimmte Wellenlängen $\lambda_{02}$, $\lambda_{03}$, bei welchen keine reduzierte Lichtintensität $I_0$ erfasst ist, gilt:

$$\lambda_{02} < \lambda < \lambda_{03}.$$

Die Wellenlänge $\lambda$, bei welcher eine reduzierte Lichtintensität I erfasst wird, wird folglich von den Wellenlängen $\lambda_{02}$, $\lambda_{03}$, bei welchen reflektierte Lichtintensität $I_{02}$, $I_{03}$ erfasst ist, beidseitig, d. h. von links und rechts, eingegrenzt. Es ist ferner denkbar, dass beide Wellenlängen $\lambda_{02}$, $\lambda_{03}$ links, also die Gleichung $\lambda_{02}, \lambda_{03} < \lambda$ erfüllen, oder beide Wellenlängen $\lambda_{02}$, $\lambda_{03}$ rechts, also die Gleichung $\lambda < \lambda_{02}, \lambda_{03}$ erfüllen, von der Wellenlänge $\lambda$ gelegen sind. Dies ermöglicht, die reflektierten detektierten Lichtintensitäten $I_{02}$ und $I_{03}$, welche bei den Wellenlängen $\lambda_{02}$ und $\lambda_{03}$ erfasst sind, derart zu interpolieren, dass näherungsweise eine nicht reduzierte Lichtintensität $I_0$ bei der Wellenlänge $\lambda$ erhalten wird. Hierdurch kann zunächst gemäß das Lambert-Beersche Gesetz, welches für Lichtintensitäten ein und derselben Wellenlänge gilt, eine Abschwächung der reflektierten Lichtintensität bestimmt werden. Diese Abschwächung wird mit der Feuchte der zu trocknenden Gegenstände korreliert, wodurch ein Maß für die Feuchte H bestimmt werden kann, wie es nachfolgend noch beschrieben werden wird. Die nicht reduzierte Lichtintensität $I_0$ bei der Wellenlänge $\lambda$ entspricht einer theoretisch berechneten Lichtintensität $I_0$ bei der Wellenlänge $\lambda$.

Bevorzugt erfasst der Sensor, insbesondere nahes, mittleres oder fernes Infrarotlicht. Besonders bevorzugt erfasst der Sensor insbesondere reflektiertes Licht im Bereich von 900 nm bis 2000 nm. Es hat sich herausgestellt, dass sich in diesem Bereich Wellenlängen befinden, welche sich besonders gut zur Erfassung einer reduzierten reflektierten Lichtintensität und zur Erfassung einer reflektierten Lichtintensität eignen. Ferner hat sich herausgestellt, dass in diesem Bereich jene Wellenlänge, bei welcher sich eine reduzierte reflektierte Lichtintensität sehr gut messen lässt, beidseitig von jenen Wellenlängen umgeben ist, bei welchen eine reflektierte Lichtintensität vermessen werden kann. Dies ermöglicht eine Interpolation der nicht reflektierten Lichtintensität bei der Wellenlänge $\lambda$, also bei der Wellenlänge, bei der eine reflektierte reduzierte Lichtintensität erfasst ist.

Gemäß einer bevorzugten Ausführungsform ist die Steuerung dazu konfiguriert, aus den erfassten Messsignalen I, $I_{01}$, $I_{02}$, welche jeweils einer Wellenlänge $\lambda$, $\lambda_{02}$, $\lambda_{03}$ in einem erfassten Wellenlängenbereich $\Delta\lambda$, $\Delta\lambda_{02}$, $\Delta\lambda_{03}$ zugeordnet ist, jeweils eine Spektralsumme zu ermitteln. Die Spektralsumme entspricht einem Integral bzw. einer Summe über die detektierten Lichtintensitätspunkte, welche von dem Sensor erfasst sind. Die Auswertung der Spektralsumme zu den detektierten Lichtintensitäten ermöglicht es, die erfassten Lichtintensitäten über den gesamten detektierten Wellenlängenbereich bei der Bestimmung der Feuchte der zu trocknenden Gegenstände einzubeziehen. Hierdurch wird die Bestimmung der Feuchte der zu trocknenden Gegenstände verbessert, insbesondere genauer.

Bevorzugt ist die Steuerung dazu konfiguriert, auf Basis mindestens zweier Messsignale, welche eine reflektierte Lichtintensität $I_{01}$, $I_{02}$, aufweisen, eine, insbesondere lineare, Interpolation auszuführen, um einen Interpolationswert $C_{interp}$ zu bestimmen, welcher eine nicht reduzierte Lichtintensität $I_0$ bei der Wellenlänge $\lambda$ angibt, bei der die reduzierte Lichtintensität I erfasst ist. Durch eine Interpolation der reflektierten Lichtintensitäten bei den Wellenlängen $\lambda_{02}$, $\lambda_{03}$, insbesondere außerhalb einer Wasserabsorptionsbande, in den Bereichen L und R kann folglich ein Lichtintensitätswert ermittelt werden, welcher näherungsweise einer nicht reduzierten Lichtintensität bei jener Wellenlänge $\lambda$, insbesondere innerhalb einer Wasserabsorptionsbande, entspricht, welche zwischen den beiden Wellenlängen $\lambda_{02}$, $\lambda_{03}$ einzuordnen ist, bei denen eine reflektierte, bevorzugt nicht oder wenig reduzierte, Lichtintensität erfasst ist. Dies ermöglicht eine Zuordnung bzw. Auswertung der Feuchte der zu trocknenden Gegenstände mittels des Lambert-Beerschen Gesetzes auf bzw. zu ein(em) Lichtintensitätsverhältnis.

Bevorzugt ist die Steuerung ferner dazu konfiguriert, ein Maß H für die aktuelle Feuchte der zu trocknenden Gegenstände auf Basis einer Proportionalität zwischen dem Maß H und einem natürlichen Logarithmus $\ln(I/C_{interp})$ aus dem Quotienten aus der gemessenen reduzierten Lichtintensität I und dem Interpolationswert $C_{interp}$ zu bestimmen. Das Maß H, welches die aktuelle Feuchte der zu trocknenden Gegenstände wiederspiegelt, erfüllt folglich die Gleichung

$$\begin{aligned} -\ln (I/I_0) &= N \cdot \sigma \cdot 2d \\ &= \rho_{H2O} \cdot \sigma \cdot 2d / (M_{H2O}) \\ &= (m_{H2O}/m_F)(\rho_F/M_{H2O})\sigma \cdot 2d_F \\ &= \alpha \cdot H, \end{aligned} \qquad (1)$$

wobei H ein Maß für die Feuchte ist und sich weiter umformen lässt zu

$$H=(m_{H2O}/m_F)= (m - m_F /m_F) \qquad (2)$$

und $\alpha$ als Feuchte unabhängiger Wert sich schreiben lässt als

$$\alpha =(\rho_F/M_{H2O})\sigma \cdot 2d_F. \qquad (3)$$

Dabei bezeichnet $\rho_{H2O} = m_{H2O}/(A\ d)$ die Dichte von Wasser, $m_{H2O}$ die Masse von Wasser $\rho_F = m_F/(A\ d)$ die Dichte der zu trocknenden Gegenstände, $m_F$ die Masse der zu trocknenden Gegenstände, $M_{H2O}$ die molekulare Masse von Wasser, d die Schichtdicke des Wassers, welche die zu trocknenden Gegenstände umgibt, $d_F$ die Schichtdicke der zu trocknenden Gegenstände und $\sigma$ der Absorptionskoeffizient von Wasser.

Die Vermessung des Lichtintensitätsverhältnisses $I/I_0$ ist folglich die Basis, mit welcher die Feuchte der zu trocknenden Gegenstände ermittelt wird. I bezeichnet dabei die Lichtintensität des reflektierten Lichtes mit "vorhandener Feuchte" und entsprechender Abschwächung durch die Absorption des Wassers, während $I_0$ die reflektierte Lichtintensität des Lichtes "ohne Feuchte" und ohne entsprechende Abschwächung durch die Absorption des Wassers bezeichnet. Die Lichtintensität I wird folglich direkt gemessen und extrahiert, während die Lichtintensität $I_0$ nicht direkt einer Messung zugänglich ist. Die Lichtintensität $I_0$ wird stattdessen indirekt bei verschiedenen Wellenlängen gemessen und dann mittels einer Interpolation näherungsweise zu einer gemessenen Lichtintensität $I_0$ bei einer Wellenlänge $\lambda$ interpoliert. Dies ermöglicht die Auswertung der Feuchte der zu trocknenden Gegenstände mittels des Lambert-Beerschen Gesetzes bei einer Wellenlänge $\lambda$. Ferner kann die Erfassung der Feuchte kontaktlos durchgeführt werden.

Bevorzugt ist die Steuerung dazu konfiguriert, auf Basis des ermittelten Maßes H und der Referenzkennlinie die aktuelle Feuchte der zu trocknenden Gegenstände zu ermitteln. Die Ermittlung der Feuchte wird folglich durch Erfassen des Lichtintensitätsverhältnisses $I/I_0$ und der Zuordnung zu einer Referenzfeuchte gemäß Referenzkennlinie bestimmt. Die Referenzkennlinie wird lediglich einmalig erfasst, um die Feuchte der zu trocknenden Gegenstände mechanisch, insbesondere mittels einer Waage, zu erfassen. Über die einmalige Erfassung der Referenzkennlinie bei zeitgleicher paralleler Durchführung der Lichtintensitätsmessung wird eine Abbildung zwischen erwarteter zu messender reflektierter Lichtintensität und erwarteter Feuchte in den zu trocknenden Gegenständen ermöglicht.

Gemäß einer bevorzugten Ausführungsform werden für verschiedene Arten von zu trocknenden Gegenständen verschiedene Referenzkennlinien in der Steuerung hinterlegt. Beispielsweise kann eine Referenzkennlinie nur für Baumwolle oder nur für Wolle oder nur für Synthetik in der Steuerung hinterlegt sein. Ferner kann eine Referenzkennlinie für eine gemischte Ladung von zu trocknenden Gegenständen hinterlegt sein. Eine gemischte Ladung von zu trocknenden Gegenständen kann beispielsweise Baumwolltextilien und Synthetiktextilien etc. umfassen. Auch andere Mischungen sind denkbar. Ferner sind unterschiedlich Zusammensetzungen mit unterschiedlichen Anteilen an verschiedenen Textilien zur Erfassung einer Kennlinie denkbar.

Bevorzugt ist die mindestens eine Referenzkennlinie einer Art von zu trocknenden Gegenständen durch eine Gewichtsmessung der Feuchte mit einer Waage erfasst. Zur Erfassung der mindestens einen Referenzkennlinie wird werksseitig während einer probehaften spektralen Erfassung der reflektierten Lichtintensitäten zeitgleich die in den zu trocknenden Gegenständen enthaltenen Feuchte mit einer Waage gemessen. Durch die Gewichtsvermessung der Feuchte mit einer Waage gelingt es, eine Verbindung zwischen der relativen Feuchte und einer erfassten reflektierten Lichtintensität bei unterschiedlichen Wellenlängen zu bestimmen. Die Referenzkennlinien werden nach ihrer Erfassung in der Steuerung des Haushaltsgerätes hinterlegt. Eine solche Referenzkennlinie kann für unterschiedliche Arten von Gegenständen erfasst sein, beispielsweise kann eine Messung mit nur Baumwolle oder eine Messung mit nur Synthetik oder nur Wolle oder dergleichen durchgeführt werden. Ferner kann eine Messung mit Mischwäsche unterschiedlicher Zusammensetzung durchgeführt werden und in der Steuerung hinterlegt werden. Dies hat den Vorteil, dass die rein optisch durchgeführte Messung während eines Trocknungsprozesses mit einer mechanisch durchgeführten Referenzmessung verglichen werden kann, wodurch dann auf einen Feuchtegehalt der zu trocknenden Gegenstände geschlossen werden kann.

Gemäß einem weiteren Aspekt der Erfindung wird ein Haushaltsgerät mit einer Trocknungsfunktion und mit einer Vorrichtung zur Erfassung einer Art von in dem Haushaltsgerät anordenbaren zu trocknenden Gegenständen offenbart, wobei das Haushaltsgerät einen Behälter zum Aufnehmen der zu trocknenden Gegenstände, mindestens einen Sensor zur Erfassung eines Messsignals in Form mindestens einer von den zu trocknenden Gegenständen reflektierten Lichtintensität, und eine Steuerung, welche mit dem mindestens einen Sensor verbunden ist und in welcher mindestens eine Referenzkennlinie gespeichert ist, aufweist. Vorschlagsgemäß ist der Sensor konfiguriert, ein erstes Messsignal in einem Wellenlängenbereich zu, in welchem Wasser Licht absorbiert zu erfassen und mindestens ein zweites Messsignal in einem anderen Wellenlängenbereich außerhalb einer Wasserabsorptionsbande zu erfassen, welches eine reflektierte Lichtintensität $I_{02}$, $I_{03}$ aufweist. Der Sensor ist ferner dazu konfiguriert, die erfassten Lichtintensitäten an die Steuerung zu geben, wobei die Steuerung dazu konfiguriert ist, auf Basis des ersten und des zweiten Messsignals und auf Basis der gespeicherten Referenzkennlinie die Feuchte H der zu trocknenden Gegenstände in den dem Behälter zu bestimmen. Gemäß dem weiteren Aspekt der vorliegenden Erfindung ist der Sensor ferner dazu konfiguriert, zu zeitlich voneinander beabstandeten Zeitpunkten $t_0$, $t_1$ wiederholt ein erstes und ein zweites Messsignal zu erfassen, und die Steuerung ist ferner dazu konfiguriert, wiederholt die aktuelle Feuchte H der zu trocknenden Gegenstände zu bestimmen, um die die Art der zu trocknenden Gegenstände auf Basis der sich zu den zeitlich beanstandeten Zeitpunkten $t_0$, $t_1$ bestimmten veränderten Feuchte H zu erfassen. Die Wiederholung der Erfassung der Lichtintensitäten kann dabei mit einer Aufnahmerate im Millisekunden-Bereich durchgeführt werden. Es ist ferner denkbar, dass zu Beginn eines Trocknungsprozesses die Wiederholung der Erfassung der Lichtintensitäten frequentierter durchgeführt wird als beispielsweise an einem Ende des Trocknungsprozesses. Zu Beginn eines Trocknungsprozesses können die zu trocknenden Gegenstände mehr Feuchte verlieren als an einem Ende des Trocknungsprozesses, wodurch die Änderung hinsichtlich einer abnehmenden Feuchte H zu Beginn stärker ins Gewicht fällt als zu Ende des Trocknungsprozesses. Es wird folglich vorgeschlagen zu zeitlich beabstandeten Zeitpunkten $t_0$, $t_1$ jeweils ein erstes Messsignal, welches auf Basis einer Absorption durch Wasser, insbesondere innerhalb einer Wasserabsorptionsbande, eine reduzierte Lichtintensität I aufweist, und mindestens ein zweites Messsignal, welches auf Basis keiner Absorption durch Wasser, insbesondere außerhalb einer Wasserabsorptionsbande, eine reflektierte Lichtintensität $I_{02}$, $I_{03}$ aufweist, zu erfassen und an die Steuerung zu geben. Besonders bevorzugt werden mindestens zwei zweite Messsignale erfasst. Die Steuerung ist dazu konfiguriert, auf Basis der ersten und des zweiten Messsignals und auf Basis der gespeicherten Referenzkennlinie jeweils die Feuchte der zu trocknenden Gegenstände in dem Behälter zu einem Zeitpunkt $t_0$, $t_1$ zu bestimmen. Die Steuerung ist ferner dazu konfiguriert, die Art der zu trocknenden Gegenstände auf Basis der sich zu den zeitlich beabstandeten Zeitpunkten $t_0$, $t_1$ veränderten bestimmten Feuchte zu erfassen.

Durch Erfassen der reduzierten und nichtreduzierten reflektierten Lichtintensität zu zeitlich beabstandeten Zeitpunkten wird ermöglicht, zu den entsprechenden zeitlich beabstandeten Zeitpunkt $t_0$, $t_1$ jeweils eine Feuchte der zu trocknenden Gegenstände in dem Haushaltsgerät zu bestimmen. Auf Basis der detektierten Feuchte zu zeitlich beabstandeten Zeitpunkten $t_0$, $t_1$ ist die Art der zu trocknenden Gegenstände ermittelbar, insbesondere durch Vergleich des aktuell erfassten Trocknungsverlaufes mit einem Verlauf der Referenzkennlinie unterschiedlicher Referenzkennlinien. Bevorzugt ist das Haushaltsgerät gemäß einem der zuvor beschriebenen Haushaltsgeräte konfiguriert. Auf diese Weise kann in einfacher Weise zunächst die aktuelle Feuchte in den zu trocknenden Gegenständen in dem Haushaltsgerät ermittelt werden und noch während der Trocknung die Art der zu trocknenden Gegenstände als solche bestimmt werden. Hierdurch wiederum kann die für den Trocknungsvorgang zu verwendende Referenzkennlinie noch während eines Trocknungsprozesses identifiziert werden und noch während des Trocknungsprozesses für die Bestimmung der Feuchte herangezogen werden.

Die vorliegende beschriebene Erfindung erfasst folglich in einem ersten Aspekt die Identifizierung der Feuchte der zu trocknenden Gegenstände und in einem zweiten Aspekt die Identifizierung der Art der zu trocknenden Gegenstände, was wiederum zur Identifizierung der bevorzugten Referenzkennlinie für die Bestimmung der Feuchte benutzt wird. Dies hat den Vorteil, dass sowohl die Bestimmung der Feuchte als solche, als auch die Bestimmung der Art der zu trocknenden Gegenstände automatisch während eines Trocknungsprozesses in dem Haushaltsgerät bestimmbar ist.

Ein Maß H für die Feuchte ist als lineare Funktion, insbesondere als Gerade, darstellbar, wobei mindestens zwei Parameter a, b, welche vom Grad der aktuellen Feuchte unabhängig sind, zur Erfassung der Art von den in dem Haushaltsgerät angeordneten zu trocknenden Gegenständen bestimmbar oder bestimmt sind. Die mindestens zwei Parameter a, b sind von der Feuchte der zu trocknenden Gegenstände unabhängig und können mathematisch wie folgt hergeleitet werden:

$$\begin{aligned} \alpha \cdot H &= -\ln\left((I/C_{Interp}) \cdot (R/L)\right) \qquad (4)\\ &= -\ln(I/C_{Interp}) - \ln(R/L)\\ &= Q + P\\ &= Q_c, \end{aligned}$$

wobei P=- ln (R/L) und Q= =- ln ($I/C_{Interp}$) ist. Das Maß H für die Feuchte kann folglich als korrigiertes spektroskopische Signal $Q_c$ interpretiert werden. Trägt man das korrigierte spektroskopische Signal $Q_c$ als Funktion des spektroskopischen Signals Q' auf, so verhält sich das korrigierte spektroskopische Signal $Q_c$ linear, so dass mittels Ausgleichsrechnung die Parameter a, b bestimmt werden können gemäß:

$$Q + P = Q_c\,(Q') = a\,Q' + b \qquad (5)$$

Es hat sich gezeigt, dass mindestens zwei Parameter a, b einer Art von zu trocknenden Gegenständen zuordenbar sind, wenn die Parameter a und b, in einem Koordinatensystem gegeneinander aufgetragen werden. Die Steuerung des Haushaltsgerätes ist daher dazu konfiguriert, für das spektroskopische Signal $Q_c = \alpha' H$ eine, insbesondere lineare, Ausgleichsrechnung durchzuführen, um die Parameter a, b zu bestimmen. Es ist ferner optional zusätzlich, denkbar, das spektroskopische Signal $Q_c$ mit einer Geraden zu fitten. Es hat sich herausgestellt, dass die Parameter a, b vom Maß der Feuchte H unabhängig sind, aber sich zur Klassifizierung der Art der zu trocknenden Gegenstände eignet. Die Steuerung ist daher dazu konfiguriert, die Parameter a, b zu bestimmen, und die Parameter a, b einer in der Steuerung bereits hinterlegten Referenzkennlinie zuzuordnen, d. h. die Art der zu trocknenden Gegenstände durch Zuordnung der Parameter a, b zu einer Referenzkennlinie zu bestimmen. Dies hat den Vorteil, dass nicht nur der Grad der Feuchte, sondern auch die Art der zu trocknenden Gegenstände während eines Trocknungsprozesses einfach bestimmt werden kann.

Ein weiterer Aspekt der Erfindung betrifft ein Verfahren zur Erfassung einer Feuchte und/oder zur Erfassung einer Art von in dem Haushaltsgerät zu trocknenden Gegenständen, wobei das Haushaltsgerät eine Trocknungsfunktion, einen Behälter zum Aufnehmen der zu trocknenden Gegenstände, mindestens einen Sensor zur Erfassung eines Messsignals in Form mindestens einer von den zu trocknenden Gegenständen reflektierten Lichtintensität und eine Steuerung, welche mit dem mindestens einen Sensor verbunden ist und in welcher mindestens eine Referenzkennlinie gespeichert ist, aufweist. Das Verfahren umfasst die Schritte:

- wiederholtes Erfassen eines ersten Messsignals in einem Wellenlängenbereich, in welchem Wasser Licht absorbiert, und
- Erfassen mindestens eines zweiten Messsignals in einem anderen Wellenlängenbereich außerhalb einer Wasserabsorptionsbande, welches eine reflektierte Lichtintensität $I_0$ aufweist,
- Übermitteln des ersten und des mindestens einen zweiten Messsignals an die Steuerung, wobei die Steuerung auf Basis des ersten und des mindestens einen zweiten Messsignals und auf Basis der gespeicherten Referenzkennlinie die aktuelle Feuchte der zu trocknenden Gegenstände in dem Behälter bestimmt.

Indem zu einem Zeitpunkt mindestens zwei, insbesondere optische, Messsignale während des Trocknungsprozesses erfasst werden und anschließend noch während des Trocknungsprozesses mit mindestens einer Referenzkennlinie, welche in der Steuerung hinterlegt ist, verglichen wird, wird die Feuchte der zu trocknenden Gegenstände zu diesem Zeitpunkt bestimmt. Das erste erfasste Messsignal weist eine von den zu trocknenden Gegenständen reduzierte Lichtintensität I auf, welches insbesondere innerhalb einer Wasserabsorptionsbande erfasst wurde. Die reduzierte Lichtintensität I wird bei einer Wellenlänge $\lambda$ erfasst, auf welcher Wasser Strahlung dieser Wellenlänge absorbiert. Das zweite Messsignal wird hingegen bei einer Wellenlänge $\lambda_{02}$, $\lambda_{03}$, insbesondere außerhalb einer Wasserabsorptionsbande, erfasst, bei welcher Wasser nicht absorbiert. Bevorzugt wird das Verfahren mit einem Haushaltsgerät, wie zuvor beschrieben, ausgeführt, besonders bevorzugt zu verschiedenen Zeitpunkten während eines Trocknungsprozesses durchgeführt, insbesondere bevorzugt mit einer Aufnahmerate im Millisekunden-Bereich. Das wiederholter erfassen der Messsignal im zeitlichen Verlauf des Trocknungsprozesses erlaubt einerseits den zeitlichen Verlauf der abnehmenden Feuchte der zu trocknenden Gegenstände zu erfassen und andererseits einen Rückschluss darauf, welche Art an zu trocknenden Gegenständen in dem Haushaltsgerät angeordnet sind. Insbesondere kann mit dem vorgeschlagenen Verfahren ein Maß für die Feuchte H der zu trocknenden Gegenstände bestimmt werden (wie bereits oben beschrieben). Hierzu wird ausgenutzt, dass das Maß für die Feuchte H, welches proportional zu dem spektroskopisch Signal $Q_c$, als lineare Funktion darstellbar ist, insbesondere als Gerade in Abhängigkeit zweier Parameter a, b. Folglich können die zwei Parameter a, b mittels Ausgleichrechnung oder mittels Geradenfit bestimmt werden. Die Parameter a, b, sind von dem Maß der Feuchte unabhängig und können daher zur Klassifizierung der zu trocknenden Gegenstände dienen (siehe die Beschreibung zu den Haushaltsgeräten).

Bevorzugt umfasst das Verfahren, insbesondere zur Klassifizierung der zu trocknenden Gegenstände, daher noch die Schritte:

- wiederholtes Erfassen des ersten und des mindestens einen zweiten Messsignals während einer Trocknung der zu trocknenden Gegenstände zu zeitlich beabstandeten Zeitpunkten $t_0$, $t_1$ und
- Erkennen der Art der zu trocknenden Gegenstände auf Basis der sich zu dem zeitlich beabstandeten Zeitpunkten $t_0$, $t_1$ veränderten bestimmten Feuchte.

Die erfassten ersten und mindestens ein zweites Messsignal werden folglich zur Bestimmung eines Maßes H für die Feuchte zu den Zeitpunkten $t_0$ bzw. $t_1$ von der Steuerung ausgewertet. Der zeitliche Verlauf der ausgewerteten Daten erlaubt es, das Maß für die Feuchte im zeitlichen Verlauf darzustellen. Es hat sich gezeigt, dass der Verlauf des Maßes H für die Feuchte als lineare Funktion darstellbar ist. Die Parameter a, b, welche dieser linearen Funktion zuordenbar sind, werden mittels Ausgleichrechnung bestimmt und verwendet, um die Art der zu trocknenden Gegenstände zu identifizieren. Bevorzugt wird nach einem Erkennen der Art der zu trocknenden Gegenstände für eine andauernde Bestimmung der Feuchte eine passende Referenzkennlinie aus einer Anzahl an hinterlegten Referenzkennlinien bestimmt. Die passende Referenzkennlinie wird anschließend für die Auswertung der aktuellen Feuchte während des andauernden Trocknungsprozesses verwendet.

Gemäß dem beschriebenen Verfahren kann gemäß einem ersten Aspekt ein Maß für die Feuchte H in den zu trocknenden Gegenständen bestimmt werden und in einem zweiten Aspekt die Art der zu trocknenden Gegenstände bestimmt werden. Nach Erfassung der Art der zu trocknenden Gegenstände kann ein Abgleich mit den in der Steuerung hinterlegten Referenzkennlinien auf die erfasste Referenzkennlinie durchgeführt werden. Dies erlaubt, die Bestimmung des Maßes der aktuellen Feuchte H schneller durchzuführen. Es von Vorteil, wenn die Erfassung der Messsignale zu Beginn eines Trocknungsprozesses öfters durchzuführen, als an einem Ende des Trocknungsprozesses, da gerade zu Beginn des Trocknungsprozesses das Maß der Feuchte kontinuierlich abnimmt. Bei Erfassen, dass im Wesentlichen keine Änderung des Maßes der Feuchte H festzustellen ist, kann das Haushaltgerät abgeschaltet werden.

Vorliegend sind unter einem Haushaltgerät beispielsweise ein Wäschetrockner, ein Waschtrockner oder eine Geschirrspülmaschine zu verstehen.

Weiter Vorteile und Merkmale aus der vorliegenden Erfindung ergeben sich aus der nachfolgenden Beschreibung bevorzugter Ausführungsformen in Bezug auf die Figuren der beigefügten Zeichnung. Es versteht sich, dass einzelne in den jeweiligen Figuren gezeigte Ausführungsformen Merkmale aufweisen können, die auch in anderen Ausführungsformen zum Einsatz gelangen können, auch wenn diese nicht explizit genannt ist, und sofern dies nicht aufgrund technischer Gegebenheiten oder explizit ausgeschlossen wurde. Es zeigen

Figur 1: ein Haushaltsgerät,

Figur 2: einen zeitlichen Verlauf eines Trocknungsvorgangs während der Erfassung einer Referenzkennlinie, wobei die Referenzkennlinie der Zuordnung eines spektroskopisch erfassten Messsignals und der aktuellen Feuchte der zu trocknenden Gegenstände dient,

Figur 3: eine vereinfachte Darstellung der Feuchtemessung, wobei die Feuchte als eine Schicht d auf den zu trocknenden Gegenständen aufgefasst wird, deren effektive Schichtdicke $d_F$ durch die tatsächlichen Bedingungen gegeben ist,

Figur 4: eine Auswahl an Rohspektren für zu trocknende Gegenstände aus beispielsweise Baumwolle, welche ein unterschiedliches Maß H an Feuchte aufweisen,

Figur 5: eine Darstellung der Auswahl an Rohspektren gemäß Fig. 4 auf unterschiedlichen Wellenlängenbereichen L, C, R, (linke Seite) und normierter Rohspektren gemäß Fig. 4 (rechte Seite),

Figur 6: eine Darstellung einer linearen Interpolation der erfassten Lichtintensitäten bei unterschiedlichen Feuchtgraden gegenüber der Wellenlänge,

Figur 6a: eine schematische Darstellung einer linearen Interpolation der erfassten Lichtintensitäten bei zwei verschiedenen Feuchtgraden gegenüber der Wellenlänge,

Figur 7: einen zeitlichen Verlauf des spektroskopischen Signals

Figur 8: eine Korrelation des spektroskopischen Signals H x $\alpha$ gemäß Figur 7, welches mit der Referenzkennlinie gemäß Figur 2 korreliert ist,

Figur 9: eine Übersicht gemessener Referenzkennlinien unterschiedlicher Textilien und deren Mischungen für den Sensor bei einer Wellenlänge $\lambda$,

Figur 10: verschiedene gemessene Referenzkennlinien unterschiedlicher Textilien und deren Mischungen für den Sensor bei einer Wellenlänge $\lambda$, wobei die Referenzkennlinien gemäß Gleichung 4 korrigiert wurden,

Figur 11: eine Darstellung des korrigierten spektroskopischen Signals Qc gegenüber dem erfassten spektroskopischen Signal Q,

Figur 12: eine Darstellung der Parameter a, b der unterschiedlichen zu trocknenden Gegenstände,

Figur 13: eine Sensoranordnung, welche Photodioden umfasst, und

Figur 14: eine schematische Darstellung der Positionierung eines Messkopfes in einem Trockner (Figur 14a) bzw. in einem Geschirrspüler (siehe Figur 14b).

Ausführungsbeispiele sind insbesondere in Zusammenschau der Figuren 1 bis 14 beschrieben.

Figur 1 zeigt ein Haushaltsgerät 10, in welchem ein Sensor 12 angeordnet mit einer spektrometrischen Einheit 14 angeordnet ist. Bevorzugt umfasst der Sensor 12 eine spektrometrische Einheit 14. Die spektrometrische Einheit 14 umfasst beispielsweise mindestens eine Linse zum Fokussieren der einfallenden reflektierten Lichtintensität, ein optisches Gitter zum wellenlängenanhängigen Selektieren der Lichtintensitäten und/oder ein Lichtfaserkabel, welches die erfassten Messsignale an eine Erfassungseinheit leitet (nicht dargestellt). Es ist aber auch denkbar, den Sensor 12 und die spektrometrischen Einheit 14 als separate Bauelemente auszubilden. Der Sensor 12 bzw. die spektrometrische Einheit 14 ist mit einer Steuerung 16 verbunden. In dem Haushaltsgerät 10 sind in einem Behälter 18 zu trocknende Gegenstände 20 angeordnet, wobei in dem Behälter 18 ein Luftstrom 19 zum Trocknen der zu trocknenden Gegenstände 20 fließt. Der Sensor 12 umfasst eine Lichtquelle 22, welche Licht 24, insbesondere Infrarotlicht, auf die zu trocknenden Gegenstände 20 aussendet. Die Lichtquelle 22 kann in Form von LEDs, insbesondere drei LEDs oder als eine Lichtquelle ausgebildet sein, die auf unterschiedlichen Wellenlängen Licht abstrahlt. Das Licht 24 wird nach einem Auftreffen auf die zu trocknenden Gegenstände 20 von den zu trocknenden Gegenständen 20 reflektiert. Das reflektierte Licht 26 wird von dem Sensor 12 erfasst und von dem Sensor 12 an die spektrometrische Einheit 14 übermittelt. In der spektrometrischen Einheit 14 wird das reflektierte Licht spektroskopisch analysiert und anschließend an eine Steuerung 16 übergeben. In der spektrometrischen Einheit 14 ist ein optisches Linsensystem und ein optisches Gitter (nicht gezeigt) vorgesehen, welche die reflektierte Lichtintensität wellenlängenabhängig detektiert und über eine Leitung, insbesondere über eine Glasfaserleitung, an die Steuerung 16 weitergibt. Die Steuerung 16 ist derart konfiguriert, dass sie die aktuell

erfassten Lichtintensitäten I, $I_{02}$, $I_{03}$ mit einer Referenzkennlinie 30, wie sie beispielsweise in Figur 2 gezeigt ist, korreliert. Hierzu sind in der Steuerung 16 zu erwartende reflektierte Lichtintensitäten I, $I_{02}$, $_{I03}$ hinterlegt, welche durch einen Vergleich mit den aktuell erfassten Lichtintensitäten I, $I_{02}$, $I_{03}$ die Zuordnung zu mindestens einer Referenzkennlinie 30 erlaubt. In der Steuerung können werkseitig bevorzugt mehrere Referenzkennlinien hinterlegt sein.

Figur 2 zeigt den Verlauf einer werkseitig erfassten Referenzkennlinie 30. In Figur 2 ist ein relatives Gewicht der zu trocknenden Gegenstände im Verlauf der Zeit dargestellt. Das relative Gewicht ist definiert als Gesamtgewicht umfassend das Eigengewicht der zu trocknenden Gegenstände und das Gewicht der Feuchte im Verhältnis zu dem Eigengewicht der zu trocknenden Gegenstände. Mit dem relativen Gewicht wird folglich der absolute Wassergehalt in Bezug auf das Eigengewicht der zu trocknenden Gegenstände 20 bezeichnet. Das relative Gewicht erlaubt es folglich, Rückschlüsse aus ein Maß der Feuchte H im Verlaufe der Zeit zu ziehen. Das relative Gewicht nach Figur 2 ist in Prozent angegeben. Wie der Figur 2 zu entnehmen ist, enthalten die zu trocknenden Gegenstände 20 zu Beginn des Trocknungsprozesses etwa 145% relative Feuchte, während beispielsweise nach einem Zeitfenster von etwa zwei Stunden eine relative Feuchte von - 3% erreicht ist. Eine relative Feuchte von -3% entspricht wie im einleitenden Teil bereits beschrieben dem Zustand "extra trocken". Für die Erfassung der Referenzkennlinie gemäß Figur 2 wurden werkseitig verschiedene Wäscheproben nach DIN-Norm EN 61121/2012 präpariert und deren Trocknungsvorgang mittels Waage dokumentiert und in der Steuerung 16 hinterlegt. Gleichzeitig wurde mit einem spektroskopischen Sensor 12 gemäß der Figur 1 die spektroskopische Antwort, wie sie beispielsweise in Figur 4 dargestellt ist, vermessen. Die Korrelation zwischen der mittels Waage erfassten Referenzkennlinie 30 und einem spektroskopisch erfassten Signal I, wie es in Figur 4 dargestellt ist, wird nachfolgend noch erläutert werden. Das spektroskopisch erfasste Signal I in Figur 4 ist in beliebiger Einheit "a.u." (arbitrary unit) gegenüber der Wellenlänge $\lambda$ dargestellt.

Figur 3 zeigt eine vereinfachte Darstellung einer Anwendung des Lambert-Beerschen Gesetzes bei der der Feuchtemessung. Die Feuchte wird als eine Schicht 32 auf den zu trocknenden Gegenständen 20 aufgefasst, wobei die effektive Schichtdicke d durch die tatsächlichen Bedingungen gegeben ist. Daher weist die Schichtdicke d keinen konstanten Wert auf. Die zu trocknenden Gegenstände 20 weisen ferner eine Dicke $d_F$ auf. Das von dem Sensor 12 emittierte Licht 24 wird folglich auf die zu trocknenden Gegenstände 20 geleitet. An oder auf den zu trocknenden Gegenständen 20 befindet sich im feuchten Zustand folglich eine Wasserschicht 32 der effektiven Schichtdicke d, an welcher das Licht 24 reflektiert wird und/oder teilweise absorbiert wird. Der reflektierte Teil des Lichtes, welcher mit dem Bezugszeichen 26 bezeichnet ist, wird zurück zum Sensor 12 geleitet. Ein Teil des Lichtes 24 wird als gestreutes Licht 36 nicht vom Sensor 12 erfasst. Das gestreute Licht 36 wird ggf. von Wassertropfen 34 in den zu trocknenden Gegenständen 20 weiter gestreut und werden vom Sensor 12 im Wesentlichen nicht erfasst.

Figur 4 zeigt eine Auswahl an Rohspektren, also detektierte Lichtintensitäten I in beliebiger Einheit a.u. für beispielsweise Baumwolle unterschiedlicher Feuchte. Auf der Y-Achse sind die spektralen Rohdaten, welche vom Sensor 12 erfasst werden, aufgetragen, während auf der X-Achse die Wellenlänge $\lambda$ in einem ein Wellenlängenbereich $\Delta\lambda$ wiedergegeben ist, auf welchem die spektralen Rohdaten erfasst sind. Figur 4 zeigt die Erfassung der spektralen Rohdaten in einem Bereich von 850 nm bis 1650 nm. Die mit dem Bezugszeichen 54 gekennzeichnete Linie zeigt ein spektroskopisches Referenzsignal, welches von der Form her erwartet wird. Die spektroskopischen Messlinien 40 bis 52 hingegen zeigen die bei einem Trocknungsprozess erfassten spektralen Rohdaten über einen Wellenlängenbereich zwischen 850 und 1650 nm. Hier weist die Messlinie 40 eine relative Feuchte von 145% auf, die Messlinie 42 von 100%, die Messlinie 44 von 50%, die Messlinie 46 von 12% ("bügelfeucht"), die Messlinie 48 von 0% ("schranktrocken"), die Messlinie 50 von -3% ("extratrocken") und die Messlinie 52 von -3,5%. Es ist ersichtlich, dass die Messlinien 50 und 52 quasi übereinander liegen und sich lediglich in einer relativen Feuchte von -0,5% unterscheiden. Es wird nochmals darauf hingewiesen, dass die spektralen Rohdaten in willkürlichen Einheiten angegeben sind. Ferner sind die Rohdaten mit den Bezugszeichen 40-52, welche während eines Messprozesses aufgenommen wurden, nicht mit der Referenzmessung 54 vergleichbar, welche bei modifizierten Systemeinstellungen der spektrometrischen Einheit 14 aufgenommen wurde. Der Vergleich der Rohdaten mit den Bezugszeichen 40-52 mit der Referenzmessung 54 dient lediglich der besseren Veranschaulichung. Der Figur 4 ist ferner zu entnehmen, dass die erfassten spektralen Rohdaten 40-52 während des Fortschreitens eines Trocknungsprozesses (von Linie 40 zu Linie 52) eine zunehmende Lichtintensität aufweisen und dass einzelne Peaks der Linien ausgeprägter sind. Dies lässt sich damit erklären, dass zu Beginn des Trocknungsprozesses ein Großteil der Strahlung 24 absorbiert wird und folglich nur ein geringer Anteil an reflektierter Strahlung den Sensor 12 erreicht. Daher fallen die spektralen Rohdaten zur Kennlinie 40 mit einer relativen Feuchte von 145% gegenüber den spektralen Rohdaten zur Kennlinie 52 mit einer relativen Feuchte von -3,5% hinsichtlich ihres Lichtintensitätsverlaufes weniger intensitätsreich aus. Diese Abschwächung der Lichtintensität lässt sich physikalisch mit Hilfe des Lambert-Beerschen Gesetzes erklären, welches eine Abschwächung der Lichtintensität einer Strahlung bei dem Durchgang durch ein Medium mit einer absorbierenden Substanz in Abhängigkeit von der Konzentration der absorbierenden Substanz und ihrer Schichtdicke d beschreibt. Gemäß dem Lambert-Beerschen Absorptionsgesetz gilt für die nicht absorbierte reflektierte Lichtintensität I im Verhältnis zu einer vollständig reflektieren Lichtintensität $I_0$ bei einer Wellenlänge $\lambda$ folgendes Verhältnis:

$$I / I_0 = e^{-(n\,\sigma\,2d)}, \quad (6)$$

wobei d die Schichtdicke der Wasserschicht ist, $\sigma$ einen Absorptionskoeffizienten wiedergibt, welcher Wellenlängenabhängig ist und n eine Stoffmengenkonzentration der absorbierenden Substanz vorliegend Wasser wiedergibt. Mit einigen Umformungen lässt sich folgender Zusammenhang herstellen:

$$\begin{aligned} -\ln (I/I_0) &= N \cdot \sigma \cdot 2d \quad (1)\\ &= \rho_{H2O} \cdot \sigma \cdot 2d / (M_{H2O})\\ &= (m_{H2O} / m_F)\,(\rho_F / M_{H2O})\sigma \cdot 2d_F\\ &= \alpha \cdot H, \end{aligned}$$

wobei H ein Maß für die Feuchte ist und sich weiter umformen lässt zu

$$H=(m_{H2O} / m_F)= (m - m_F / m_F) \quad (2)$$

und $\alpha$ als Feuchte unabhängiger Wert sich schreiben lässt als

$$\alpha =(\rho_F/M_{H2O})\sigma \cdot 2d_F. \quad (3)$$

Dabei bezeichnet $\rho_{H2O} = m_{H2O}/ (A\ d)$ die Dichte von Wasser, $m_{H2O}$ die Masse von Wasser $\rho_F = m_F/ (A\ d)$ die Dichte der zu trocknenden Gegenstände, $m_F$ die Masse der zu trocknenden Gegenstände, $M_{H2O}$ die molekulare Masse von Wasser, d die Schichtdicke des Wassers, welche die zu trocknenden Gegenstände umgibt, $d_F$ die Schichtdicke der zu trocknenden Gegenstände und $\sigma$ der Absorptionskoeffizient von Wasser.

Anhand der Gleichung (1) ist zu erkennen, dass zwischen dem Maß der relativen Feuchte H und dem Lichtintensitätsverhältnis $I/I_0$ ein Zusammenhang existiert. Die Erfassung des Lichtintensitätsverhältnisses aus $I/I_0$ bildet folglich eine Basis für die Zuordnung zwischen einem optischen Signal gemäß $I/I_0$ und einem Maß an vorhandener Feuchte H in den zu trocknenden Gegenständen 20. Denn die vorhandene Feuchte schwächt das gemessene reflektierte Licht gemäß dem Lambert-Beerschen Gesetz ab. I bezeichnet daher die Lichtintensität des reflektierten Lichtes, wobei ein Teil des Lichtes von der Wasserschicht 32 absorbiert ist und $I_0$ bezeichnet die reflektierte Lichtintensität des Lichtes bei der keine Absorption durch Wasser stattfindet. Die reduzierte reflektierte Lichtintensität I wird folglich direkt aus den Rohdaten extrahiert, während ein nicht reduzierte, aber reflektierte, Lichtintensität $I_0$ nicht durch eine direkte Messung zugänglich ist. Die nicht reduzierte reflektierte Lichtintensität $I_0$ bedarf einer Ableitung aus gemessenen reflektierten Lichtintensitäten $I_{02}$, $I_{03}$ bei Wellenlängen $\lambda_{02}$, $\lambda_{03}$. Zur Bestimmung der nicht reduzierten, reflektierten Lichtintensität $I_0$ aus den aus gemessenen Lichtintensitäten $I_{02}$, $I_{03}$ werden während eines Trocknungsprozesses von der Steuerung 16 entsprechende Schritte durchgeführt, welche nachfolgend in Zusammenschau der Figuren 5 - 9 verdeutlicht werden.

Die Figur 5a zeigt beispielsweise den Verlauf der spektralen Rohdaten für die Kennlinien 40 - 54, wie diese auch gemäß Figur 4 dargestellt ist, während die Figur 5b normierte spektrale Daten für die Kennlinien 40-52 zeigt. Die normierten Spektralen Daten (Fig. 5b) wurden erhalten, indem die spektralen Rohdaten für die Kennlinien 40 - 52 mit der Kennlinien 54 normiert wurden. Ferner sind der Figur 5 a, b jeweils Wellenlängenbereiche C (center), L (left), R (right) zu entnehmen, wobei ein Wellenlängenbereich $\Delta\lambda$ ein Zentrum bei 975 nm aufweist und mit C (für Zentrum) bezeichnet ist, während ein Wellenlängenbereich $\lambda_{01}$ ein Zentrum bei einer Wellenlänge von 900 nm aufweist und mit L (für links) bezeichnet ist und wobei ein Wellenlängenbereich $\lambda_{02}$ ein Zentrum bei einer Wellenlänge von 1050 nm aufweist und mit R (für rechts) bezeichnet ist. Zur Bestimmung der nicht reduzierten, reflektierten Lichtintensität $I_0$ werden folglich die Wellenbereiche $\Delta\lambda_{01}$ und $\Delta\lambda_{02}$ vermessen, welche zu einer Erfassung der Lichtintensitäten $I_{02}$, $I_{03}$ führen. Die detektierte Lichtintensität in diesen beiden Bereichen ist beispielsweise in der Figur 6 gegenüber der Wellenlänge aufgetragen. In der Figur 6 sind die erfassten Lichtintensitäten $I_{02}$, $I_{03}$ der Bereiche L und R für die Lichtintensitätslinien 40-52 gemäß Figur 4 dargestellt. Ferner sind die Verbindungsgeraden zwischen $I_{02}$, $I_{03}$ dargestellt, welche es ermöglichen bei der Wellenlänge $\lambda$ einen interpolierten Lichtintensitätswert $C_{interp}$ abzulesen. Der Figur 6 ist zu entnehmen, dass mit sinkender Feuchte (von Linie 40 bis Linie 52) der interpolierte Lichtintensitätswert $C_{interp}$, welcher einer näherungsweisen nicht reduzierten Lichtintensität $I_0$ bei der Wellenlänge $\lambda$ entspricht, immer mehr der tatsächlich zu erwartenden nicht reduzierten Lichtintensität $I_0$ bei der Wellenlänge $\lambda$ entspricht (siehe den Verlauf der Punkte zwischen C

und $C_{interp}$ in Figur 6).

Zur Verbesserung des Verständnisses der Figur 6 sind in Figur 6a rein schematisch die erfassten Lichtintensitäten $I_{02}$, $I_{03}$ zu den erfassten Linien 40 (mit 145% relativer Feuchte) und 46 (mit 12 % relativer Feuchte) dargestellt. Die erfassten Lichtintensitäten I bei der Wellenlänge $\lambda$ liegen jeweils unterhalb dem zugehörigen interpolierten Lichtintensitätswert $C_{interp}$ bei der Wellenlänge $\lambda$. Zwischen den Lichtintensitäten $I_{02}$, $I_{03}$, I ist eine Fläche in Form eines Dreieckes 60, 62 aufgespannt. Mit sinkender Feuchte (von Linie 40 zu Linie 46) verringert sich der Abstand 64, 66 zwischen einer reduzierten reflektierten Lichtintensität I und einem interpolierte Lichtintensitätswert $C_{interp}$ zwischen den erfassten Lichtintensitäten $I_{02}$, $I_{03}$ einer Linie 40, 46. Der Abstand 66 bei einer relativen Feuchte von 12 % beispielweise ist kleiner als der Abstand 64 bei einer relativen Feuchte von 145 %. Dies ist damit zu erklären, dass die erfasste Lichtintensität I bei der Wellenlänge $\lambda$ eine reduzierte reflektierte Lichtintensität darstellt, wohingegen $C_{interp}$ einer nicht reduzierten reflektierten Lichtintensität $I_0$ bei der Wellenlänge $\lambda$ entspricht. Der Abstand 64, 66 zwischen der reduzierten reflektierten Lichtintensität I und der nicht reduzierten reflektierten Lichtintensität $I_0$ bei der Wellenlänge $\lambda$, also bei $C_{interp}$ entspricht einem Maß für die vom Wasser absorbierte Lichtintensität. Folglich nimmt die Fläche in Form eines Dreieckes 64, 66 mit sinkender Feuchte ab. Dieser Sachverhalt ist sowohl der Figur 6a als auch der Figur 6 zu entnehmen, wobei in der Figur 6 zu jeder Lichtintensitätslinie 40-52 eine entsprechende Fläche in Form eines Dreieckes dargestellt ist.

Um folglich einen Wert für die nicht reduzierte, reflektierte Lichtintensität $I_0$ zu erhalten, werden die gemessene Lichtintensität $I_{02}$ bei der Wellenlänge $\lambda_{02}$, also die Lichtintensität im Bereich $L=\Delta\lambda_{02}$, und die gemessene Lichtintensität $I_{03}$ bei $\lambda_{03}$, also die Lichtintensität im Bereich $R=\Delta\lambda_{03}$, interpoliert. Der Interpolationswert $C_{intp}$ gibt näherungsweise den Wert der nicht reduzierten reflektierten Lichtintensität $I_0$ bei der Wellenlänge $\lambda$ wieder. Der interpolierte Wert $C_{intp}$ wird folglich der nicht reduzierten, nicht reflektierten Lichtintensität $I_0$ bei der Wellenlänge $\lambda$ gleichgesetzt, welche einer theoretisch berechneten Intensität $I_0$ bei der Wellenlänge $\lambda$ entspricht. Die Durchführung einer solchen Interpolation kann für Lichtintensitäten, welche in Bereichen außerhalb einer Wasserabsorptionsbande von Wasser erfasst sind, für verschiedene Wellenlängen $\lambda$ innerhalb einer Wasserabsorptionsbande durchgeführt werden. Figur 5 zeigt beispielweise die Durchführung einer spektralen Messung in verschiedenen Wellenlängenbereichen um die Wellenlängen 900 nm, 975 nm und 1050 nm herum, wobei der Wellenlängenbereich $L=\Delta\lambda_{02}$ eine Erfassung der Wellenlänge $\lambda_{02}$ um 900 nm herum umfasst und der Wellenlängenbereich $L=\Delta\lambda_{02}$ eine Erfassung der Wellenlänge $R=\lambda_{03}$ um 1050 nm herum umfasst. Die Wellenlängen $\lambda_{02}$ und $\lambda_{03}$ entsprechen jeweils Wellenlängen außerhalb einer Wasserabsorptionsbande, d.h. Wellenlängen $\lambda_{02}$ und $\lambda_{03}$ entsprechen jeweils Wellenlängen, bei denen Wasser nicht absorbiert. Bevorzugt sind die Wellenlängenbereiche $L=\Delta\lambda_{02}$ und $R=\Delta\lambda_{03}$ schmalbandig gewählt, um möglichst Interferenzen zu vermeiden. Die Wellenlänge $\lambda$ entspricht einer Wellenlänge innerhalb einer Wasserabsorptionsbande, wobei der Wellenlängenbereich $C=\Delta\lambda$ einem Wellenlängenbereich um die Wellenlänge $\lambda$ entspricht. Die Wellenlänge $\lambda$ entspricht folglich einer Wellenlänge, bei der Wasser absorbiert, gemäß Figur 5 ist $\lambda$=975 nm. Bevorzugt ist der Wellenlängenbereich $C=\Delta\lambda$ breitbandig gewählt. Dies hat den Vorteil, dass der Wassergehalt möglichst genau bestimmt werden kann. Es ist ferner denkbar, eine Wellenlänge $\lambda$ von1450 nm, oder 1950 nm zur Erfassung einer Wellenlänge innerhalb einer Wasserabsorptionsbande zu wählen . Folglich können die spektralen Messungen auch bei anderen Wellenlängen durchgeführt werden. Dies kann beispielsweise auch bei einer Wellenlänge von 1450 nm, einer Wellenlänge innerhalb einer Wasserabsorptionsbande,, und bei Wellenlängen wie beispielsweise 1200 nm oder 1600 nm, zwei Wellenlängen außerhalb einer Wasserabsorptionsbande, durchgeführt werden. Die Lichtquelle 22 des Sensors 12 kann zur Erfassung der Lichtintensitäten I, $I_0$ beispielsweise in Form von LEDs, vorzugsweise drei LEDs, ausgebildet sein. Die LEDs sind als punktuelle Lichtquelle ausgebildet, welche Licht bei einer Wellenlänger oder Licht auf einem engen Wellenlängenbereich ausstrahlt. Die LEDs könnten als Array auf einen Chip integriert sein. Ferner könnte die Lichtquelle 22 des Sensors 12 als eine Lichtquelle ausgebildet sein, welche über einen breiten Wellenlängenbereich Licht ausstrahlt, beispielsweise eine Breitbandlichtquelle. Im Falle eine Breitbandlichtquelle, können ferner Filterelement an der Breitbandlichtquelle vorgesehen sein, welche nur die Transmission bestimmter Wellenlängen in den Behälter 18 erlaubt. Es ist aber auch denkbar, beispielsweise den Sensor 12 als ein Breitbanddetektor auszubilden, welcher Lichtintensitäten selektiert nach ihrer Wellenlänge erfasst bzw. mit Filterelementen ausgebildet ist, welche nur die Transmission bestimmter Wellenlängen in den Detektor erlaubt. Ein solcher Breitbanddetektor kann beispielsweise ein Indium-Gallium-Arsenid-Detektor (InGaAs) sein.

Nach Bestimmung von $C_{intp} = I_0$ kann gemäß dem Lambert-Beerschen Gesetz (Gleichung (1)) aus den spektroskopisch erfassten Lichtintensitäten eine Abschwächung der Lichtintensität aufgrund der Absorption durch Wasser berechnet werden, welches als spektroskopisches Signal Q bezeichnet wird. Die Berechnung dieses spektroskopischen Signals Q wird in beabstandeten Zeitschritten durchgeführt. Die Darstellung des spektroskopischen Signals Q über der Zeit t ist in Figur 7 dargestellt. Ein Vergleich zwischen der Figur 2 und der Figur 7 zeigt einen ähnlichen Verlauf der Kurven über die Zeit t. Zur Bestimmung der aktuellen Feuchte in den zu trocknenden Gegenständen 20 wird folglich die Referenzmessung gemäß Figur 2, welche werkseitig während eines Trocknungsprozesses erfasst wurde und in der Steuerung 16 hinterlegt wurde, mit der aktuell erfassten Messung gemäß Figur 7 korreliert. Eine solche Korrelation ist in Figur 8 dargestellt. Figur 8 zeigt, dass das spektroskopische Signal Q (auf der Y-Achse) dargestellt gegenüber der Feuchte (X-Achse) gemäß der Referenzkennlinie 30 aus Figur 2. Die Korrelation zwischen dem spektroskopischen

Signal Q=-ln($I/I_0$) zur erwarteten Feuchte H $\alpha$ gemäß der Referenzkennlinie aus Figur 2 wird einmalig werkseitig bestimmt. Es versteht sich von selbst, dass eine solche Korrelation für verschiedene zu trocknende Gegenstände durchgeführt werden kann. Beispielsweise kann eine solche Korrelationsmessung für nur Baumwolle, oder nur Wolle oder nur Synthetik oder sämtliche Mischungen dieser Textilien vorgenommen worden sein. Selbstverständlich sind solche Referenzmessung auch für andere Textileine oder andere zu trocknende Gegenstände 20 durchführbar, wie beispielsweise für Geschirr in einer Geschirrspülmaschine. Die Kennlinien 54 in den Figuren 7, 8 geben abgeschätzte Genauigkeitsgrenzen für die ermittelte Referenzkennlinie 56 an. Eine spektroskopische Kennlinie 56 gemäß Figur 8 ist bezüglich ihrer Lichtintensität und ihrer Steigung abhängig von der Feuchte der zu trocknenden Gegenstände 20. Daher wurde die Vermessung der Referenzkennlinien für unterschiedliche zu trocknenden Gegenstände 20 bereits werkseitig durchgeführt. Eine Übersicht gemessener nach Referenzkennlinien für verschiedene zu trocknende Gegenstände 20, insbesondere Textilien unterschiedlicher Art und deren Mischungen ist beispielsweise in Figur 9 dargestellt. In Figur 9 ist das bestimmte spektroskopische Signal Q gegenüber der relativen Feuchte in Gewichtsprozent angegeben. Die Kennlinien wurden bei einer Wellenlänge von 1400 nm mit dem Sensor 12 aufgenommen. Der Figur 9 ist zu entnehmen, dass unterschiedliche zu trocknende Gegenstände 20 unterschiedliche Kennlinien zur Folge haben, wobei dieselbe Zusammensetzung von zu trocknenden Gegenständen 20 zu sich überschneidenden Kennlinien führen. Diese Abhängigkeit von der Art der zu trocknenden Gegenstände 20 lässt sich gemäß folgender Gleichung korrigieren:

$$\begin{aligned} \alpha \cdot H &= -\ln((I/C_{Interp}) \cdot (R/L) \qquad (4) \\ &= -\ln(I/C_{Interp}) - \ln(R/L) \\ &= Q + P \\ &= Q_{c,}(Q') \\ &= a\,Q' + b \qquad (7) \end{aligned}$$

Die Variable P ist dabei als -ln (R/L) gegeben, wobei L= $\Delta\lambda_{02}$ einen Wellenlängenbereich angibt, welcher links von der Wellenlänge $\lambda$ liegt, also einen Wellenlängenbereich $\Delta\lambda_{02}$ angibt mit Wellenlängen $\lambda_{02} < \lambda$, und R= $\Delta\lambda_{03}$ einen Wellenlängenbereich angibt, welcher links von der Wellenlänge $\lambda$ liegt, also einen Wellenlängenbereich $\Delta\lambda_{03}$ angibt mit Wellenlängen $\lambda_{03} > \lambda$ .Die Variable Q ist als -ln ($I/C_{interp}$) gegeben. Die relative Feuchte H $\alpha$ ist folglich als eine Gerade gemäß der Gleichung (7) als a Q' + b = $Q_{c'}$(Q') darstellbar. Die Geradensteigung a und der Y-Achsenabschnitt b sind von der Feuchte der zu trocknenden Gegenstände 20 unabhängig. Die Parameter a und b lassen sich daher der Art der zu trocknenden Gegenstände zuordnen.

Figur 10 zeigt korrigierte Kennlinien des spektroskopischen Signals Qc unterschiedlicher Arten von zu trocknenden Gegenständen 20, wobei die Kennlinien gemäß Gleichung (7) korrigiert worden sind. Man entnimmt der Figur 10, dass nach einer Korrektur der Kennlinien die unterschiedlichen gemessenen Kennlinien unterschiedlicher zu trocknender Gegenstände 20 eine deutliche Überlappung zeigen. Dies hat zur Folge, dass eine Bestimmung der Feuchte ohne genaue Kenntnis der zu trocknenden Gegenstände 20 mit erhöhter Genauigkeit erfolgen kann.

Figur 11 zeigt einen linearen Zusammenhang zwischen dem korrigierten optischen Signal $Q_c$ und dem erfassten optischen Signal Q, wobei $Q_c$ (auf der Y-Achse in Figur 11) dem korrigierten optischen Signal gemäß der Y-Achse aus Figur 10 entspricht und das spektroskopische Signal Q (auf der X-Achse in Figur 11) dem Signal Q gemäß der Y-Achse aus Figur 9 entspricht. Die Darstellung von Qc (Q) zeigt deutlich einem linearen Zusammenhang, welcher eine Zuordnung des spektroskopischen Signals Q zu unterschiedlichen Arten von zu trocknenden Gütern ermöglicht. Fasst man die Darstellung von $Q_c$(Q) als Gerade auf gemäß

$$Q_C\,(Q') = a\,Q' + b, \qquad (7)$$

so kann durch Bestimmung der Parameter b und a eine Zuordnung zu den verschiedenen zu trocknenden Gegenständen 20 erfolgen. Eine wiederholte Messung des spektroskopischen Signals Q und die Bestimmung der Parameter a, b daraus zeigt bei Gegenüberstellung der Parameter a, b einen linearen Zusammenhang, jedoch nur für ein und dieselbe Art von zu trocknenden Gegenstände 20. Eine Zuordnung zu unterschiedlichen Arten von zu trocknenden Gegenständen im (a, b)-Raum ist beispielsweise in Figur 12 gezeigt. Ein Bestimmen der Parameter a und b während eines Trocknungsprozesses und ein anschließender Vergleich mit hinterlegten Parametern a und b ermöglicht somit während eines Trocknungsprozesses die Bestimmung der Art der zu trocknenden Gegenstände. Nach Bestimmung der Art an zu trocknenden Gegenständen 20 kann eine Referenzkennlinie 30, wie beispielsweise in Figur 2 dargestellt, während eines laufenden Trocknungsprozess bestimmt werden, wodurch wiederum die Bestimmung des Maßes der Feuchte H der zu trocknenden Gegenstände 20 schnelle bestimmt werden kann.

Figur 13 zeigt ein Ausführungsbeispiel eines Aufbaus eines Sensors 12. Der Sensor 12 umfasst Photodioden mit jeweils einem Bandpassfilter. Die Photodiode L umfasst einen 900 nm - Bandpass, so dass beispielsweise emittiertes Licht einer Wellenlänge weit unterhalb und weit oberhalb von 900 nm nicht passieren kann, während die Photodiode C mit einem 985 nm - Bandpass und die Photodiode R einen 1050 nm - Bandpass umfassen. Durch den jeweiligen Bandpass kann sichergestellt werden, dass nur gewünschte Wellenlängenbereiche, wie beispielsweise die Wellenlängenbereiche L, C, R, erfasst werden, und etwaige Störintensitäten auszufiltern. Der Sensor 12 ist ferner mit einem Bandpassfilter ausgebildet, welcher lediglich Licht in den drei zuvor genannten Wellenlängen durchlässt. Bevorzugt ist der Sensor 12 als ein Chip mit einem Breitbandfilter ausgebildet, auf dem mindestens drei LEDs angeordnet sind. Alternativ könnte der Chip auch mit einer Lichtquelle ausgebildet sein, welche auf einem ganzen Wellenlängenbereich abstrahlt. Es ist also denkbar, dass entweder nur die LEDs selektiv Licht emittieren und/oder der Breitbandfilter nur selektiv Licht zur Erfassung durch den Sensor hineintreten lässt. Dies hat zur Folge, dass ein besonders gutes Signal zu Geräuschverhältnis detektiert werden kann.

Figur 14 zeigt exemplarisch die Positionierung eines Sensors 12 in einem Trockner (Figur 14 a), oder in einem Geschirrspüler (Figur 14 b). Die Positionierung des Sensors 12 kann folglich direkt über und/oder seitlich neben den zu trocknenden Gegenständen 20 angeordnet sein. Ferner können mehr als ein Sensor 12 vorgesehen sein, um die Feuchte H der zu trocknenden Gegenstände 20 zu erfassen. Die Anordnung mehrerer Sensoren 12 zur Erfassung der Feuchte H kann dazu genutzt werden, um unterschiedliche Feuchtegrade unterschiedlicher Arten von zu trocknenden Gegenständen 20 während eines Trocknungsprozesses zu detektieren, sofern diese verschiedenen Sensoren 12 zugeordnet sind.

**Bezugszeichenliste**

| | |
|---|---|
| 10 | Haushaltsgerät |
| 12 | Sensor |
| 14 | spektrometrische Einheit |
| 16 | Steuerung |
| 18 | Behälter |
| 19 | Luftstrom |
| 20 | zu trocknende Gegenstände |
| 22 | Lichtquelle |
| 24 | emittierte Licht |
| 26 | reflektiertes Licht |
| 30 | Referenzkennlinie |
| 32 | Wasserschicht |
| 34 | Wassertropfen |
| 36 | gestreutes Licht |
| 40 | Rohdaten bei 145% Feuchte |
| 42 | Rohdaten bei 100% Feuchte |
| 44 | Rohdaten bei 50% Feuchte |
| 46 | Rohdaten bei 12% Feuchte |
| 48 | Rohdaten bei 0% Feuchte |
| 50 | Rohdaten bei -3% Feuchte |
| 52 | Rohdaten bei -3,5% Feuchte |
| 60 | Dreieck |
| 62 | Dreieck |
| 64 | Abstand |
| 66 | Abstand |

| | |
|---|---|
| $\lambda_{02}$, $\lambda_{03}$, $\lambda$ | Wellenlänge |
| I | reduzierte reflektierte Lichtintensität |
| $I_{02}$, $I_{03}$ | reflektierte Lichtintensität |
| Q | spektroskopischen Signal |
| Qc | korrigiertes spektroskopischen Signal |
| a, b | Parameter |
| d | Schichtdicke des Wassers |

$d_F$ Schichtdicke der zu trocknenden Gegenstände

## Patentansprüche

1. Haushaltsgerät (10) mit einer Trocknungsfunktion und mit einer Vorrichtung zur Erfassung einer Feuchte H von in dem Haushaltsgerät (10) anordenbaren zu trocknenden Gegenständen (20), wobei das Haushaltsgerät (10) aufweist:

   einen Behälter (18) zum Aufnehmen der zu trocknenden Gegenstände (20), mindestens einen Sensor (12) zur Erfassung mindestens eines Messsignals in Form einer von den zu trocknenden Gegenständen (20) reflektierten Lichtintensität (I, $I_{02}$, $I_{03}$), und eine Steuerung (16), welche mit dem mindestens einen Sensor (12) verbunden ist und in welcher mindestens eine Referenzkennlinie (30) gespeichert ist,
   **dadurch gekennzeichnet, dass**
   der Sensor (12) konfiguriert ist, ein erstes Messsignal (I) in einer Wasserabsorptionsbande entsprechend einem Wellenlängenbereich, in welchem Wasser Licht absorbiert, zu erfassen, und mindestens ein zweites Messsignal in einem anderen Wellenlängenbereich außerhalb einer Wasserabsorptionsbande zu erfassen, welches eine reflektierte Lichtintensität ($I_{02}$, $I_{03}$) aufweist, und an die Steuerung (16) zu geben, wobei die Steuerung (16) dazu konfiguriert ist, auf Basis des ersten und des mindestens einen zweiten Messsignals und auf Basis der gespeicherten Referenzkennlinie (30) die Feuchte (H) der zu trocknenden Gegenstände (20) in dem Behälter (18) zu bestimmen.

2. Haushaltsgerät (10) nach Anspruch 1, wobei der Sensor (12) als ein, insbesondere Licht emittierender, Lichtsensor, insbesondere als ein Infrarotsensor, oder als eine Anordnung, welche Fotodioden, insbesondere mindestens 3 LEDs, oder eine Lichtquelle (22) und/oder spektrale Filter umfasst, ausgebildet ist.

3. Haushaltsgerät (10) nach einem der vorhergehenden Ansprüche, wobei der Sensor (12) zur zeitgleichen oder zur hintereinander folgenden Erfassung des ersten und des mindestens einen zweiten Messsignals ausgebildet ist.

4. Haushaltsgerät (10) nach einem der vorhergehenden Ansprüche, wobei der Sensor (12) bei vorbestimmten Wellenlängen ($\lambda$, $\lambda_{02}$, $\lambda_{03}$) jeweils ein Messsignal erfasst, insbesondere bei einer Absorptions- und/oder Emissionswellenlängen von Wasser zur Erfassung einer reduzierten Lichtintensität (I) und bei mindestens einer anderen Wellenlängen zur Erfassung einer reflektierten Lichtintensität ($I_{02}$, $I_{03}$).

5. Haushaltsgerät (10) nach einem der vorhergehenden Ansprüche, wobei der Sensor (12), insbesondere zeitgleich, mindestens zwei, bevorzugt drei, Lichtintensitäten (I, $I_{02}$, $I_{03}$) erfasst, wobei jede Lichtintensität (I, $I_{02}$, $I_{03}$) einer Wellenlänge ($\lambda$, $\lambda_{02}$, $\lambda_{03}$) in jeweils einem Wellenlängenbereich ($\Delta\lambda$, $\Delta\lambda_{02}$, $\Delta\lambda_{03}$) zugeordnet ist, wobei die Wellenlänge ($\lambda$, $\lambda_{02}$, $\lambda_{03}$) jeweils ein Zentrum eines vom Sensor (12) erfassten Wellenlängenbereiches ($\Delta\lambda$, $\Delta\lambda_{02}$, $\Delta\lambda_{03}$) bildet.

6. Haushaltsgerät (10) nach einem der vorhergehenden Ansprüche, wobei für die vorbestimmte Wellenlänge ($\lambda$) zur Erfassung einer reduzierten Lichtintensität (I) und für die vorbestimmten Wellenlängen ($\lambda_{02}$, $\lambda_{03}$) zur Erfassung einer reflektierten Lichtintensität ($I_{02}$, $I_{03}$) gilt: $\lambda_{02} < \lambda < \lambda_{03}$

7. Haushaltsgerät (10) nach einem der vorhergehenden Ansprüche, wobei der Sensor (12), insbesondere nahes, mittleres oder fernes Infrarotlicht erfasst, insbesondere reflektiertes Licht im Bereich von 900 nm bis 2000 nm erfasst.

8. Haushaltsgerät (10) nach einem der vorhergehenden Ansprüche, wobei die Steuerung (16) dazu konfiguriert ist, aus den erfassten reflektierten Lichtintensitäten (I, $I_{01}$, $I_{02}$), welche jeweils einer Wellenlänge ($\lambda$, $\lambda_{02}$, $\lambda_{03}$) in einem erfassten Wellenlängenbereich ($\Delta\lambda$, $\Delta\lambda_{02}$, $\Delta\lambda_{03}$) zugeordnet ist, jeweils eine Spektralsumme zu ermitteln.

9. Haushaltsgerät (10) nach einem der vorhergehenden Ansprüche, wobei die Steuerung (16) dazu konfiguriert ist, auf Basis mindestens zweier zweiter Messsignale, welche eine reflektierte Lichtintensität ($I_{01}$, $I_{02}$) aufweisen, eine, insbesondere lineare, Interpolation auszuführen, um einen Interpolationswert $C_{interp}$ zu bestimmen, welcher eine reflektierte Lichtintensität ($I_0$) bei der Wellenlänge ($\lambda$) angibt, bei der die reduzierte reflektierte Lichtintensität (I) erfasst ist.

10. Haushaltsgerät (10) nach Anspruch 9, wobei die Steuerung (16) dazu konfiguriert ist, ein Maß für die aktuelle Feuchte (H) der zu trocknenden Gegenständen (20) auf Basis einer Proportionalität zwischen dem Maß für die Feuchte (H) und einem natürlichen Logarithmus $\ln(I/C_{interp})$ aus dem Quotienten aus der gemessenen reduzierten Lichtintensität (I) und dem Interpolationswert ($C_{interp}$) zu bestimmen.

**11.** Haushaltsgerät (10) nach Anspruch 10, wobei die Steuerung (16) dazu konfiguriert ist, auf Basis des ermittelten Maßes für die Feuchte (H) und der Referenzkennlinie (30) die Feuchte (H) der zu trocknenden Gegenständen (20) zu ermitteln.

**12.** Haushaltsgerät (10) nach einem der vorhergehenden Ansprüche, wobei für verschiedene Arten von zu trocknenden Gegenständen (20) verschiedene Referenzkennlinien (30) in der Steuerung (16) hinterlegt sind.

**13.** Haushaltsgerät (10) nach einem der vorhergehenden Ansprüche, wobei die mindestens eine Referenzkennlinie (30) durch eine Gewichtsmessung der Feuchte (H) mit einer Waage erfasst ist.

**14.** Haushaltsgerät (10), insbesondere nach einem der vorhergehenden Ansprüche, mit einer Trocknungsfunktion und mit einer Vorrichtung zur Erfassung einer Art von in dem Haushaltsgerät (10) anordenbaren zu trocknenden Gegenständen (20), wobei das Haushaltsgerät (10) aufweist:

einen Behälter (18) zum Aufnehmen der zu trocknenden Gegenstände (20), mindestens einen Sensor (12) zur Erfassung eines Messsignals in Form mindestens einer von den zu trocknenden Gegenständen (20) reflektierten Lichtintensität (I, $I_{02}$, $I_{03}$), und eine Steuerung (16), welche mit dem mindestens einen Sensor (12) verbunden ist und in welcher mindestens eine Referenzkennlinie (30) gespeichert ist,
**dadurch gekennzeichnet, dass**
der Sensor (12) konfiguriert ist, ein erstes Messsignal (I) in einer Wasserabsorptionsbande entsprechend einem Wellenlängenbereich, in welchem Wasser Licht absorbiert, zu erfassen und mindestens ein zweites Messsignal in einem anderen Wellenlängenbereich außerhalb einer Wasserabsorptionsbande zu erfassen, welches eine reflektierte Lichtintensität ($I_{02}$, $I_{03}$) Lichtintensität, aufweist, und an die Steuerung (16) zu geben, wobei die Steuerung (16) dazu konfiguriert ist, auf Basis des ersten und des zweiten Messsignals und auf Basis der gespeicherten Referenzkennlinie (30) die aktuelle Feuchte (H) der zu trocknenden Gegenstände (20) in dem Behälter (18) zu bestimmen, wobei der Sensor (12) ferner dazu konfiguriert ist, zu zeitlich beabstandeten Zeitpunkten ($t_0$, $t_1$) wiederholt ein erstes und ein zweites Messsignal zu erfassen, und die Steuerung (16) ferner dazu konfiguriert ist, wiederholt die aktuelle Feuchte (H) der zu trocknenden Gegenstände (20) zu bestimmen, um die Art der zu trocknenden Gegenstände (20) auf Basis der sich zu den zeitlich beabstandeten Zeitpunkten ($t_0$, $t_1$) bestimmten veränderten Feuchte (H) zu erfassen.

**15.** Haushaltsgerät (10) nach Anspruch 14, wobei die Steuerung (16) dazu konfiguriert ist, ein Vielfaches ($\alpha$) des Maßes der Feuchte (H) als lineare Funktion, insbesondere als Gerade gemäß $\alpha$ H= a Q'+ b, darzustellen und mindestens zwei Parameter (a, b), welche vom Grad der aktuellen Feuchte (H) unabhängig sind, zur Erfassung der Art von in dem Haushaltsgerät (10) angeordneten zu trocknenden Gegenständen (20) zu bestimmen, wobei Q' ein spektroskopische Signal Q' ist.

**16.** Verfahren zur Erfassung einer Feuchte und/oder zur Erfassung einer Art von in einem Haushaltsgerät (10) anordenbaren zu trocknenden Gegenständen (20), wobei das Haushaltsgerät (10) eine Trocknungsfunktion aufweist sowie:
einen Behälter (18) zum Aufnehmen der zu trocknenden Gegenstände (20), mindestens einen Sensor (12) zur Erfassung eines Messsignals in Form mindestens einer von den zu trocknenden Gegenständen (20) reflektierten Lichtintensität, und eine Steuerung (16), welche mit dem mindestens einen Sensor (12) verbunden ist und in welcher mindestens eine Referenzkennlinie (30) gespeichert ist, wobei das Verfahren die Schritte umfasst:

Erfassen eines ersten Messsignals (I) in einem Wellenlängenbereich, in welchem Wasser Licht absorbiert, und Erfassen mindestens eines zweiten Messsignals in einem Wellenlängenbereich außerhalb einer Wasserabsorptionsbande, welches eine reflektierte Lichtintensität ($I_{02}$, $I_{03}$) aufweist,
Übermitteln des ersten und des mindestens einen zweiten Messsignals an die Steuerung (16), wobei die Steuerung (16) auf Basis des ersten und des mindestens einen zweiten Messsignals und auf Basis der gespeicherten Referenzkennlinie (30) die aktuelle Feuchte (H) der zu trocknenden Gegenständen (20) in dem Behälter (14) bestimmt.

**17.** Verfahren nach Anspruch 16, welches mit einem Haushaltsgerät (10) nach einem der Ansprüche 1 bis 15 ausgeführt wird.

**18.** Verfahren nach Anspruch 16 oder 17, wobei das Verfahren die Schritte umfasst:

wiederholtes Erfassen des ersten und des mindestens einen zweiten Messsignals während einer Trocknung der zu trocknenden Gegenstände (20) zu zeitlich beanstandeten Zeitpunkten ($t_0$, $t_1$) und
Erkennen der Art der zu trocknenden Gegenstände (20) auf Basis der sich zu den zeitlich beabstandeten Zeitpunkten ($t_0$, $t_1$) veränderten bestimmten Feuchte (H).

**19.** Verfahren nach einem der Ansprüche 16 bis 18, wobei nach Erkennen der Art der zu trocknenden Gegenstände (20) während einer Trocknung für eine andauernde Bestimmung der Feuchte (H) eine die Art der zu trocknenden Gegenstände (20) passende Referenzkennlinie (30) aus einer Anzahl an in der Steuerung (16) hinterlegten Referenzkennlinien (3) bestimmt wird.

**Claims**

**1.** Household appliance (10) with a drying function and with a device for recording a humidity level H of objects (20) to be dried that can be arranged in the household appliance (10), wherein the household appliance (10) has:

a container (18) for receiving the objects (20) to be dried, at least one sensor (12) for recording at least one measuring signal in the form of a light intensity ($I$, $I_{02}$, $I_{03}$) reflected by the objects (20) to be dried, and a controller (16), which is connected to the at least one sensor (12) and in which at least one reference characteristic curve (30) is stored,
**characterised in that**
the sensor (12) is configured to record a first measuring signal ($I$) in a water absorption strip according to a wavelength range in which water absorbs light, and to record at least one second measuring signal in another wavelength range outside of a water absorption strip, which has a reflected light intensity ($I_{02}$, $I_{03}$), and to provide the same to the controller (16), wherein the controller (16) is configured to determine the humidity level (H) of the objects (20) to be dried in the container (18) on the basis of the first and the at least one second measuring signal and on the basis of the stored reference characteristic curve (30).

**2.** Household appliance (10) according to claim 1, wherein the sensor (12) is embodied as a light sensor, in particular emitting light, in particular as an infrared sensor, or as an arrangement which comprises photo diodes, in particular at least 3 LEDs or a light source (22) and/or spectral filter.

**3.** Household appliance (10) according to one of the preceding claims, wherein the sensor (12) is embodied for recording the first and the at least one second measuring signal at the same time or successively.

**4.** Household appliance (10) according to one of the preceding claims, wherein the sensor (12) records in each case one measuring signal at predetermined wavelengths ($\lambda$, $\lambda_{02}$, $\lambda_{03}$), in particular at absorption and/or emission wavelengths of water to record a reduced light intensity (I) and at at least one other wavelength to record a reflected light intensity ($I_{02}$, $I_{03}$).

**5.** Household appliance (10) according to one of the preceding claims, wherein the sensor (12) records at least two, preferably three, light intensities ($I$, $I_{02}$, $I_{03}$) in particular at the same time, wherein each light intensity ($I$, $I_{02}$, $I_{03}$) is assigned to a wavelength ($\lambda$, $\lambda_{02}$, $\lambda_{03}$) in a wavelength range ($\Delta\lambda$, $\Delta\lambda_{02}$, $\Delta\lambda_{03}$) in each case, wherein the wavelength ($\lambda$, $\lambda_{02}$, $\lambda_{03}$) in each case forms a centre of a wavelength range ($\Delta\lambda$, $\Delta\lambda_{02}$, $\Delta\lambda_{03}$) recorded by the sensor (12).

**6.** Household appliance (10) according to one of the preceding claims, wherein $\lambda_{02} < \lambda < \lambda_{03}$ applies for the predetermined wavelength ($\lambda$) for recording a reduced light intensity (I) and for the predetermined wavelengths ($\lambda_{02}$, $\lambda_{03}$) for recording a reflected light intensity ($I_{02}$,$I_{03}$).

**7.** Household appliance (10) according to one of the preceding claims, wherein the sensor (12) records in particular near, medium or far infrared light, in particular reflected light in the range of 900 nm to 2000 nm.

**8.** Household appliance (10) according to one of the preceding claims, wherein the controller (16) is configured to determine in each case a spectral sum from the recorded, reflected light intensities ($I$, $I_{01}$, $I_{02}$), which is assigned in each case to a wavelength ($\lambda$, $\lambda_{02}$, $\lambda_{03}$) in a recorded wavelength range ($\Delta\lambda$, $\Delta\lambda_{02}$, $\Delta\lambda_{03}$).

**9.** Household appliance (10) according to one of the preceding claims, wherein the controller (16) is configured to execute one, in particular linear, interpolation, on the basis of at least two second measuring signals which have a reflected light intensity ($I_{01}$, $I_{02}$) in order to determine an interpolation value $C_{interp}$ which specifies a reflected light intensity ($I_0$) at the wavelength ($\lambda$) at which the reduced reflected light intensity (I) is recorded.

**10.** Household appliance (10) according to claim 9, wherein the controller (16) is configured to determine a measure of the current humidity level (H) of the objects (20) to be dried on the basis of a proportionality between the measure of the humidity level (H) and a natural logarithm $\ln(I/C_{interp})$ from the quotient of the measured, reduced light intensity (I) and the interpolation value ($C_{interp}$).

**11.** Household appliance (10) according to claim 10, wherein the controller (16) is configured to determine the humidity level (H) of the objects (20) to be dried on the basis of the measure of the humidity level (H) determined and the reference characteristic curve (30).

**12.** Household appliance (10) according to one of the preceding claims, wherein various reference characteristic curves (30) are stored in the controller (16) for various types of objects (20) to be dried.

**13.** Household appliance (10) according to one of the preceding claims, wherein the at least one reference characteristic curve (30) is recorded by a weight measurement of the humidity level (H) with scales.

**14.** Household appliance (10), in particular according to one of the preceding claims, with a drying function and with a device for recording a type of objects (20) to be dried that can be arranged in the household appliance (10), wherein the household appliance (10) has:

a container (18) for receiving the objects (20) to be dried, at least one sensor (12) for recording a measuring signal in the form of at least one light intensity ($I$, $I_{02}$, $I_{03}$) reflected by the objects (20) to be dried and a controller (16), which is connected to the at least one sensor (12), and in which at least one reference characteristic curve (30) is stored,

**characterised in that**

the sensor (12) is configured to record a first measuring signal (I) in a water absorption strip according to a wavelength range in which water absorbs light, and to record at least one second measuring signal in another wavelength range outside of a water absorption strip, which has a reflected light intensity ($I_{02}$, $I_{03}$) and to provide the same to the controller (16), wherein the controller (16) is configured to determine the current humidity level (H) of the objects (20) to be dried in the container (18) on the basis of the first and the second measuring signal and on the basis of the stored reference characteristic curve (30), wherein the sensor (12) is also configured to repeatedly record a first and a second measuring signal at time instants ($t_0$, $t_1$) which are spaced apart temporally and the controller (16) is also configured to repeatedly determine the current humidity level (H) of the objects (20) to be dried, in order to record the type of objects (20) to be dried on the basis of the changed humidity level (H) determined at the time instants ($t_0$, $t_1$) which are spaced apart temporally.

**15.** Household appliance (10) according to claim 14, wherein the controller (16) is configured to represent a multiple ($\alpha$) of the measure of the humidity level (H) as a linear function, in particular as a straight line according to $\alpha$ H=a Q'+b, and to determine at least two parameters (a, b), which are independent of the degree of the current humidity level (H), in order to record the type of objects (20) to be dried and arranged in the household appliance (10), wherein Q' is a spectroscopic signal Q'.

**16.** Method for recording a humidity level and/or for recording a type of objects (20) to be dried that can be arranged in a household appliance (10), wherein the household appliance (10) has a drying function and:
a container (18) for recording the objects (20) to be dried, at least one sensor (12) for recording a measuring signal in the form of at least one light intensity reflected by the objects (20) to be dried, and a controller (16), which is connected to the at least one sensor (12), and in which at least one reference characteristic curve (30) is stored, wherein the method comprises the steps:

recording a first measuring signal (I) in a wavelength range in which water absorbs light, and recording at least one second measuring signal in a wavelength range outside of a water absorption strip, which has a reflected light intensity ($I_{02}$, $I_{03}$),

transferring the first and the at least one second measuring signal to the controller (16), wherein the controller (16) determines the current humidity level (H) of the objects (20) to be dried in the container (14) on the basis of the first and the at least one second measuring signal and on the basis of the stored reference characteristic curve (30).

**17.** Method according to claim 16, which is carried out with a household appliance (10) as claimed in one of claims 1 to 15.

**18.** Method according to claim 16 or 17, wherein the method comprises the steps:
repeatedly recording the first and the at least one second measuring signal while drying the objects (20) to be dried at time instants ($t_0$, $t_1$) which are spaced apart temporally and identifying the type of objects (20) to be dried on the basis of the changed humidity level (H) determined at the time instants ($t_0$, $t_1$) which are spaced apart temporally.

**19.** Method according to one of claims 16 to 18, wherein after identifying the type of objects (20) to be dried during a drying cycle, for a continual determination of the humidity level (H), a reference characteristic curve (30) suited to the type of objects (20) to be dried is determined from a number of reference characteristic curves (3) stored in the controller (16).

## Revendications

**1.** Appareil électroménager (10) avec une fonction de séchage et un dispositif de détection d'une humidité H émanant d'objets (20) à sécher pouvant être disposés dans l'appareil électroménager (10), cet appareil électroménager (10) comportant:

un réservoir (18) pour le rangement des objets (20) à sécher, au moins un détecteur (12) qui détecte au moins un signal de mesure sous forme d'une intensité lumineuse (I, $I_{02}$, $I_{03}$) réfléchie par les objets (20) à sécher, et une commande (16), laquelle est raccordée avec le au moins un détecteur (12) et dans laquelle se trouve mémorisée au moins une courbe caractéristique de référence (30),
**caractérisé en ce que**
le détecteur (12) est configuré pour détecter un premier signal de mesure (I) dans une bande d'absorption de l'eau correspondant à une gamme de longueurs d'onde dans laquelle l'eau absorbe la lumière, et pour détecter au moins un deuxième signal de mesure dans une autre gamme de longueurs d'onde extérieure à une bande d'absorption de l'eau, laquelle présente une intensité de lumière ($I_{02}$, $I_{03}$) réfléchie, et pour donner à la commande (16), cette commande (16) étant configurée pour déterminer, sur base du premier et du au moins un deuxième signal de mesure et, sur base de la courbe caractéristique de référence (30) mémorisée, l'humidité (H) des objets (20) à sécher dans le réservoir (18).

**2.** Appareil électroménager (10) selon la revendication 1, le détecteur (12) étant réalisé comme un détecteur de lumière, en particulier émettant de la lumière, en particulier comme un détecteur infrarouge, ou comme un montage, lequel comprend des photodiodes, en particulier au moins 3 diodes électroluminescentes, ou une source lumineuse (22) et/ou des filtres spectraux.

**3.** Appareil électroménager (10) selon l'une des revendications précédentes, le détecteur (12) étant réalisé pour détecter simultanément ou successivement le premier et le au moins un deuxième signal de mesure.

**4.** Appareil électroménager (10) selon l'une des revendications précédentes, le détecteur (12) détectant en cas de longueurs d'onde prédéterminées ($\lambda$, $\lambda_{02}$, $\lambda_{03}$) chaque fois un signal de mesure, en particulier en cas de longueurs d'ondes d'absorption et/ou d'émissions d'eau pour la détection d'une intensité lumineuse (I) réduite et en cas d'au moins une autre longueur d'onde pour la détection d'une intensité lumineuse ($I_{02}$, $I_{03}$) réfléchie.

**5.** Appareil électroménager (10) selon l'une des revendications précédentes, le détecteur (12), en particulier détectant simultanément au moins deux, de préférence trois intensités lumineuses (I, $I_{02}$, $I_{03}$), chaque intensité lumineuse (I, $I_{02}$, $I_{03}$) étant associée à une longueur d'onde ($\lambda$, $\lambda_{02}$, $\lambda_{03}$) dans chaque fois une gamme de longueurs d'onde ($\Delta\lambda$, $\Delta\lambda_{02}$, $\Delta\lambda_{03}$), cette longueur d'onde ($\lambda$, $\lambda_{02}$, $\lambda_{03}$) formant chaque fois le centre d'une gamme de longueurs d'onde ($\Delta\lambda$, $\Delta\lambda_{02}$, $\Delta\lambda_{03}$) détectée par le détecteur (12).

**6.** Appareil électroménager (10) selon l'une des revendications précédentes, où l'on a, pour la longueur d'onde ($\lambda$) prédéterminée en vue de la détection d'une intensité lumineuse (I) réduite et pour les longueurs d'onde ($\lambda_{02}$, $\lambda_{03}$)

prédéterminées en vue de la détection d'une intensité lumineuse ($I_{02}$, $I_{03}$) réfléchie: $\lambda_{02} < \lambda < \lambda_{03}$.

**7.** Appareil électroménager (10) selon l'une des revendications précédentes, le détecteur (12) détectant en particulier de la lumière infrarouge proche, moyen ou lointain, en particulier de la lumière réfléchie dans l'intervalle compris entre 900 nm et 2000 nm.

**8.** Appareil électroménager (10) selon l'une des revendications précédentes, la commande (16) étant configurée pour détecter chaque fois une somme spectrale sur base des intensités lumineuses (I, $I_{01}$, $I_{02}$) réfléchies détectées, lesquelles sont associées chaque fois à une longueur d'onde ($\lambda$, $\lambda_{02}$, $\lambda_{03}$) dans une gamme de longueurs d'onde détectée ($\Delta\lambda$, $\Delta\lambda_{02}$, $\Delta\lambda_{03}$).

**9.** Appareil électroménager (10) selon l'une des revendications précédentes, la commande (16) étant configurée pour exécuter une interpolation en particulier linéaire, sur base d'au moins deux des deuxièmes signaux de mesure, lesquelles présentent une intensité de lumière ($I_{01}$, $I_{02}$) réfléchie et ce, pour déterminer une valeur d'interpolation $C_{interp}$, laquelle valeur donne une intensité de lumière ($I_0$) réfléchie à la longueur d'onde ($\lambda$) à laquelle l'intensité de lumière (I) réfléchie est détectée.

**10.** Appareil électroménager (10) selon la revendication 9, la commande (16) étant configurée pour déterminer une mesure de l'humidité (H) instantanée des objets (20) à sécher sur base d'une proportionnalité entre la mesure de l'humidité (H) et un logarithme naturel $\ln(I/C_{interp})$ du quotient de l'intensité lumineuse (I) réduite mesurée et la valeur d'interpolation ($C_{interp}$).

**11.** Appareil électroménager (10) selon la revendication 10, la commande (16) étant configurée pour détecter, sur base de la mesure détectée de l'humidité (H) et de la courbe caractéristique de référence (30), l'humidité (H) des objets (20) à sécher.

**12.** Appareil électroménager (10) selon l'une des revendications précédentes, pour différents types d'objets (20) à sécher, différentes courbes caractéristiques de référence (30) étant mémorisées dans la commande (16).

**13.** Appareil électroménager (10) selon l'une des revendications précédentes, la au moins une courbe caractéristique de référence (30) étant détectée par une mesure pondérale de l'humidité (H) avec une balance.

**14.** Appareil électroménager (10), en particulier selon l'une des revendications précédentes, avec une fonction de séchage et un dispositif de détection d'un type d'objets (20) à sécher pouvant être disposés dans l'appareil électroménager (10), cet appareil électroménager (10) comportant:

un réservoir (18) pour le rangement des objets (20) à sécher, au moins un détecteur (12) qui détecte au moins un signal de mesure sous forme d'au moins une intensité lumineuse (I, $I_{02}$, $I_{03}$) réfléchie par les objets (20) à sécher, et une commande (16), laquelle est raccordée avec le au moins un détecteur (12) et dans laquelle se trouve mémorisée au moins une courbe caractéristique de référence (30),
**caractérisé en ce que**
le détecteur (12) est configuré pour détecter un premier signal de mesure (I) dans une bande d'absorption de l'eau correspondant à une gamme de longueurs d'onde dans laquelle l'eau absorbe la lumière, et pour détecter au moins un deuxième signal de mesure dans une autre gamme de longueurs d'onde extérieure à une bande d'absorption de l'eau, laquelle présente une intensité de lumière ($I_{02}$, $I_{03}$) réfléchie, et pour donner à la commande (16),
cette commande (16) étant configurée pour déterminer, sur base du premier et du deuxième signal de mesure, et sur base de la courbe caractéristique de référence (30) mémorisée, l'humidité instantanée (H) des objets (20) à sécher dans le réservoir (18),
le détecteur (12) étant en outre configuré pour détecter à des moments différents dans le temps ($t_0$, $t_1$), à nouveau un premier et un deuxième signal de mesure et la commande (16) étant en outre configurée pour déterminer à nouveau l'humidité (H) instantanée des objets (20) à sécher et ce, pour détecter le type des objets (20) à sécher sur base de l'humidité (H) modifiée déterminée à des moments ($t_0$, $t_1$) différents dans le temps.

**15.** Appareil électroménager (10) selon la revendication 14, la commande (16) étant configurée pour représenter un multiple ($\alpha$) de la mesure de l'humidité (H) comme fonction linéaire, en particulier comme droite selon $\alpha H = a Q' + b$, et au moins deux paramètres (a, b), lesquels sont indépendants du degré de l'humidité (H) instantanée, et pour déterminer, pour la détection du type d'objets (20) à sécher qui se trouvent dans l'appareil électroménager (10), Q' étant un signal spectroscopique Q'.

**16.** Procédé de détection d'une humidité et/ou de détection d'un type d'objets (20) à sécher pouvant se trouver dans l'appareil électroménager (10), cet appareil électroménager (10) comportant une fonction de séchage, ainsi que: un réservoir (18) pour le rangement des objets (20) à sécher, au moins un détecteur (12) qui détecte un signal de mesure sous forme d'au moins une intensité lumineuse réfléchie par les objets (20) à sécher, et une commande (16), laquelle est raccordée avec le au moins un détecteur (12) et dans laquelle se trouve mémorisée au moins une courbe caractéristique de référence (30), ce procédé comprenant les étapes suivantes:

détection d'un premier signal de mesure (I) dans une gamme de longueurs d'onde, dans laquelle l'eau absorbe la lumière, et
détection d'au moins un deuxième signal de mesure dans une gamme de longueurs d'onde extérieure à la bande d'absorption de l'eau, laquelle comporte une intensité de lumière ($I_{02}$, $I_{03}$) réfléchie,
retransmission du premier et du au moins un deuxième signal de mesure à la commande (16), cette commande (16) déterminant, sur base du premier et du au moins un deuxième signal de mesure, et sur base de la courbe caractéristique de référence (30) mémorisée, l'humidité (H) instantanée des objets (20) à sécher dans le réservoir (14).

**17.** Procédé selon la revendication 16, lequel est exécuté avec un appareil électroménager (10) selon l'une des revendications 1 à 15.

**18.** Procédé selon la revendication 16 ou 17, ce procédé comprenant les étapes suivantes:
détection répétée du premier et du au moins un deuxième signal de mesure pendant le séchage des objets (20) à sécher à des moments ($t_0$, $t_1$) différents dans le temps et reconnaissance du type d'objets (20) à sécher sur base de l'humidité (H) déterminée modifiée aux moments ($t_0$, $t_1$) différents dans le temps.

**19.** Procédé selon l'une des revendications 16 à 18, après la reconnaissance du type d'objets (20) à sécher pendant le séchage pour une détermination continue de l'humidité (H), une courbe caractéristique de référence (30) adaptée au type d'objets (20) à sécher étant déterminée parmi un nombre de caractéristiques (3) mémorisées dans la commande (16).

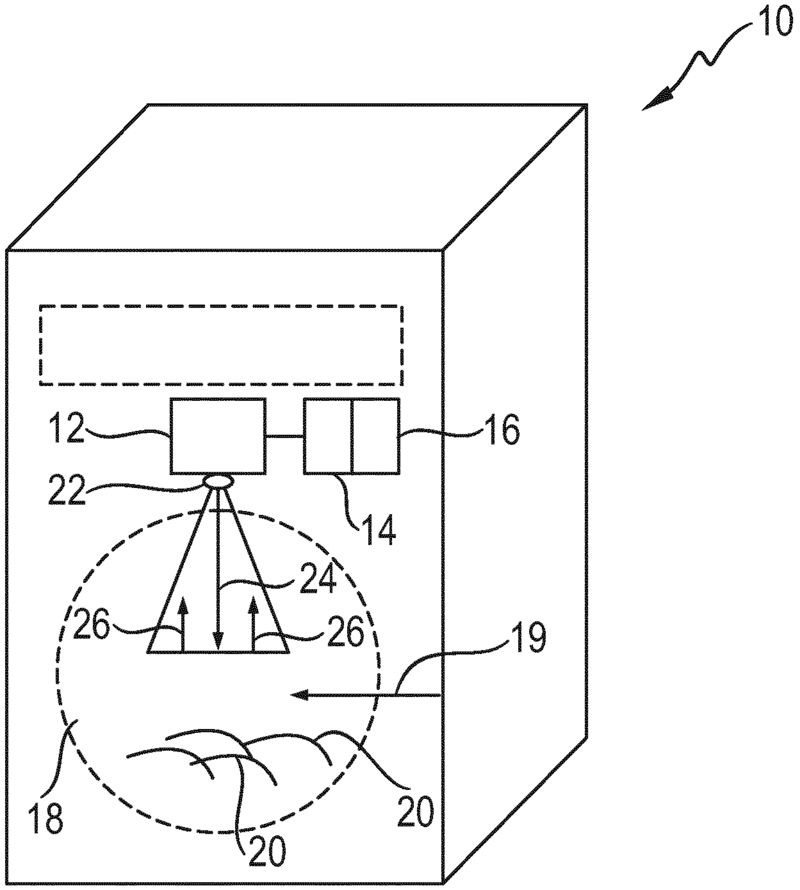


Fig. 1

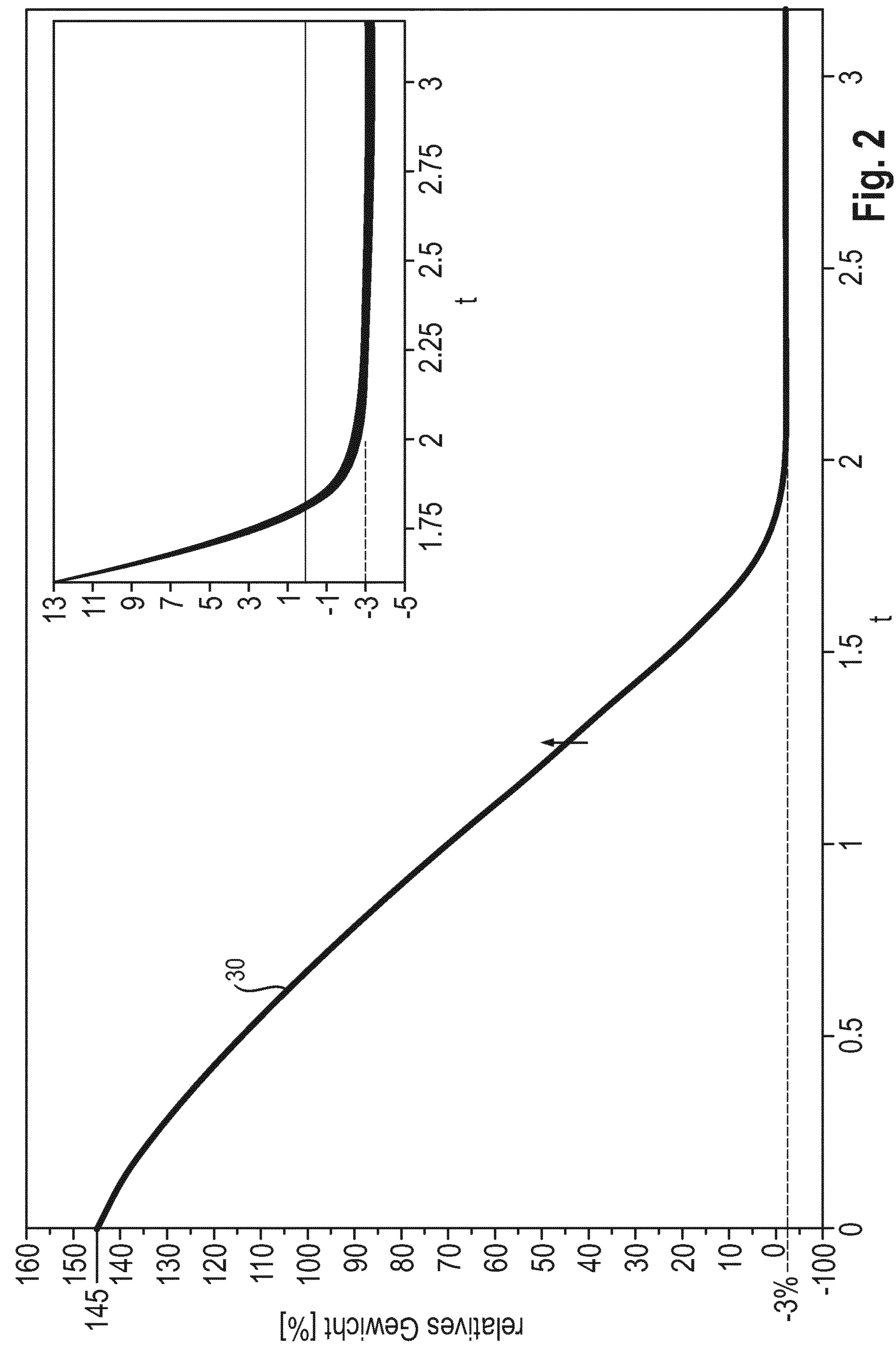
relatives Gewicht [%]
t
30
145
-3%
160
150
140
130
120
110
100
90
80
70
60
50
40
30
20
10
0
-100
0
0.5
1
1.5
2
2.5
3
13
11
9
7
5
3
1
-1
-3
-5
1.75
2.25
2.75

Fig. 2

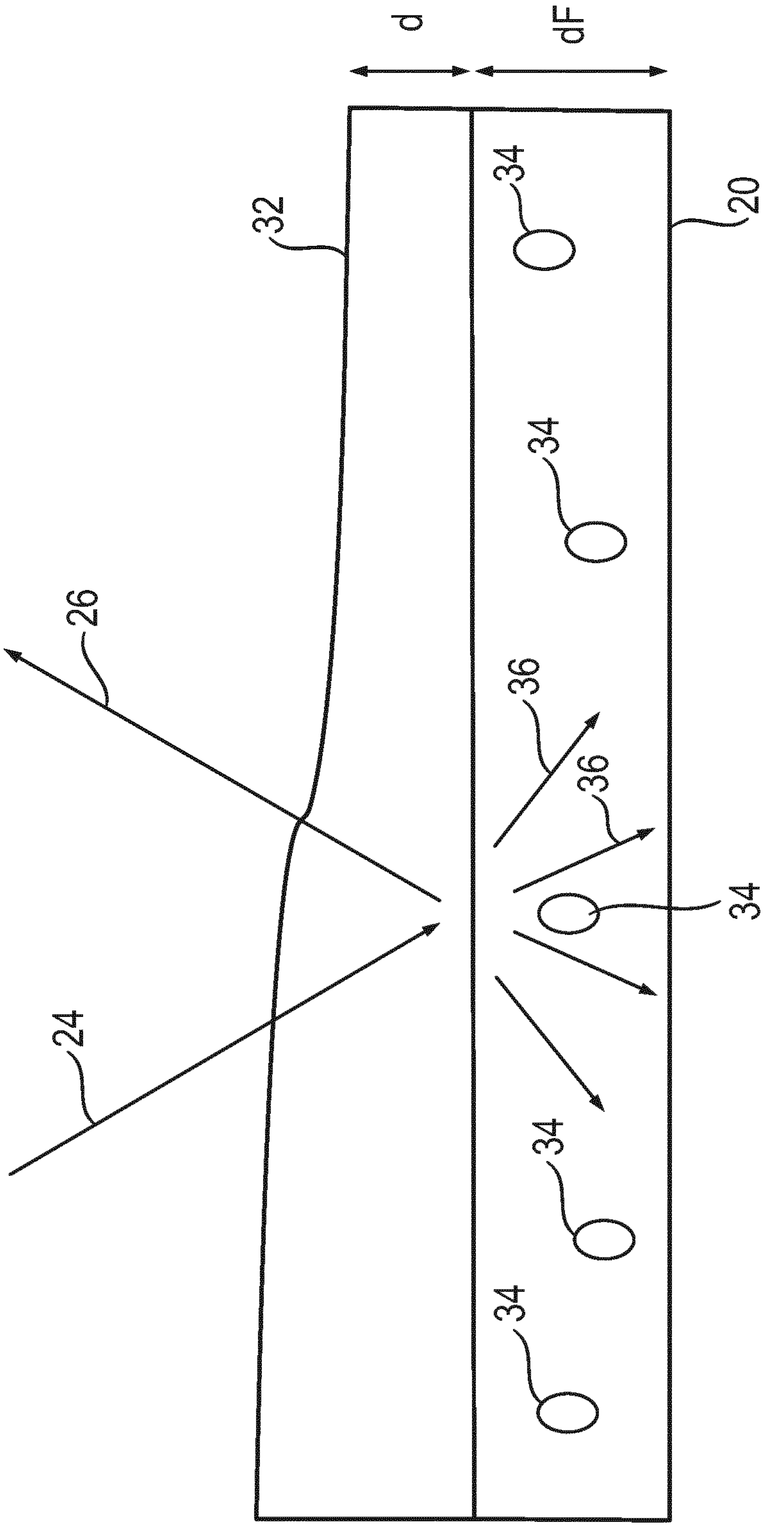


Fig. 3

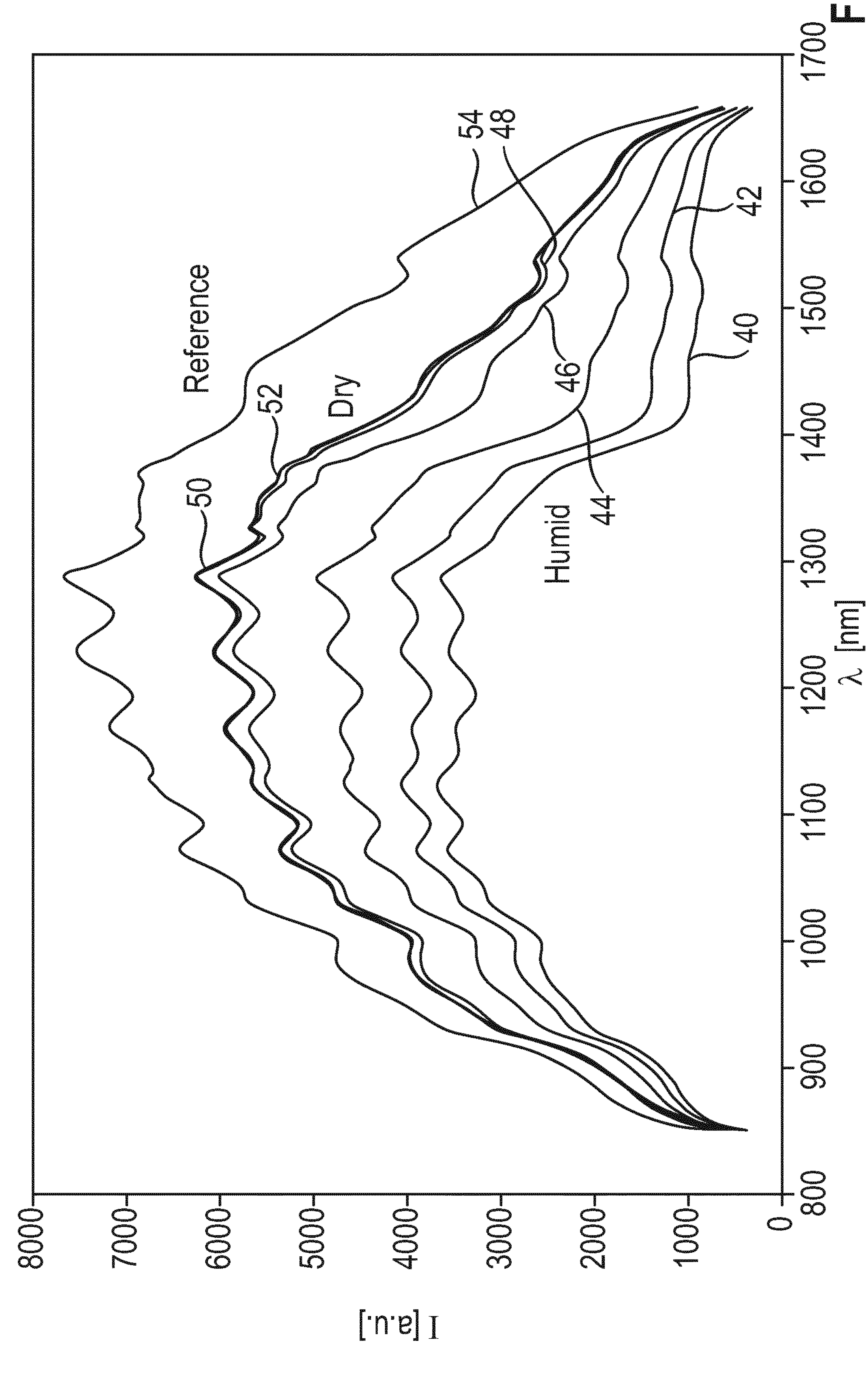
I [a.u.]
0
1000
2000
3000
4000
5000
6000
7000
8000
800
900
1000
1100
1200
1300
1400
1500
1600
1700
λ [nm]
Reference
Dry
Humid
40
42
44
46
48
50
52
54

Fig. 4

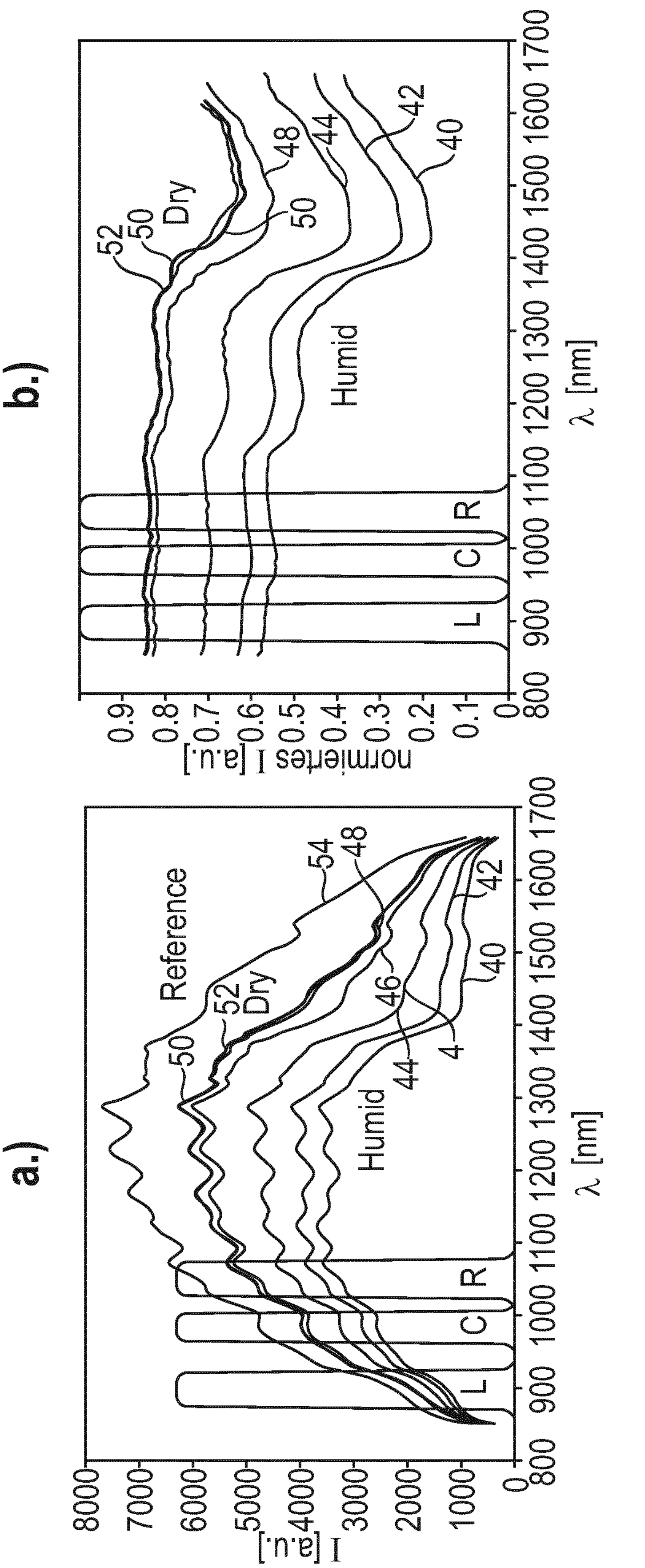
a.)
I [a.u.]
8000
7000
6000
5000
4000
3000
2000
1000
0
800
900
1000
1100
1200
1300
1400
1500
1600
1700
λ [nm]
L
C
R
Reference
Dry
Humid
50
52
54
48
46
44
4
40
42
b.)
normiertes I [a.u.]
0.9
0.8
0.7
0.6
0.5
0.4
0.3
0.2
0.1
0
800
900
1000
1100
1200
1300
1400
1500
1600
1700
λ [nm]
L
C
R
52
50
Dry
48
50
44
42
40
Humid

Fig. 5

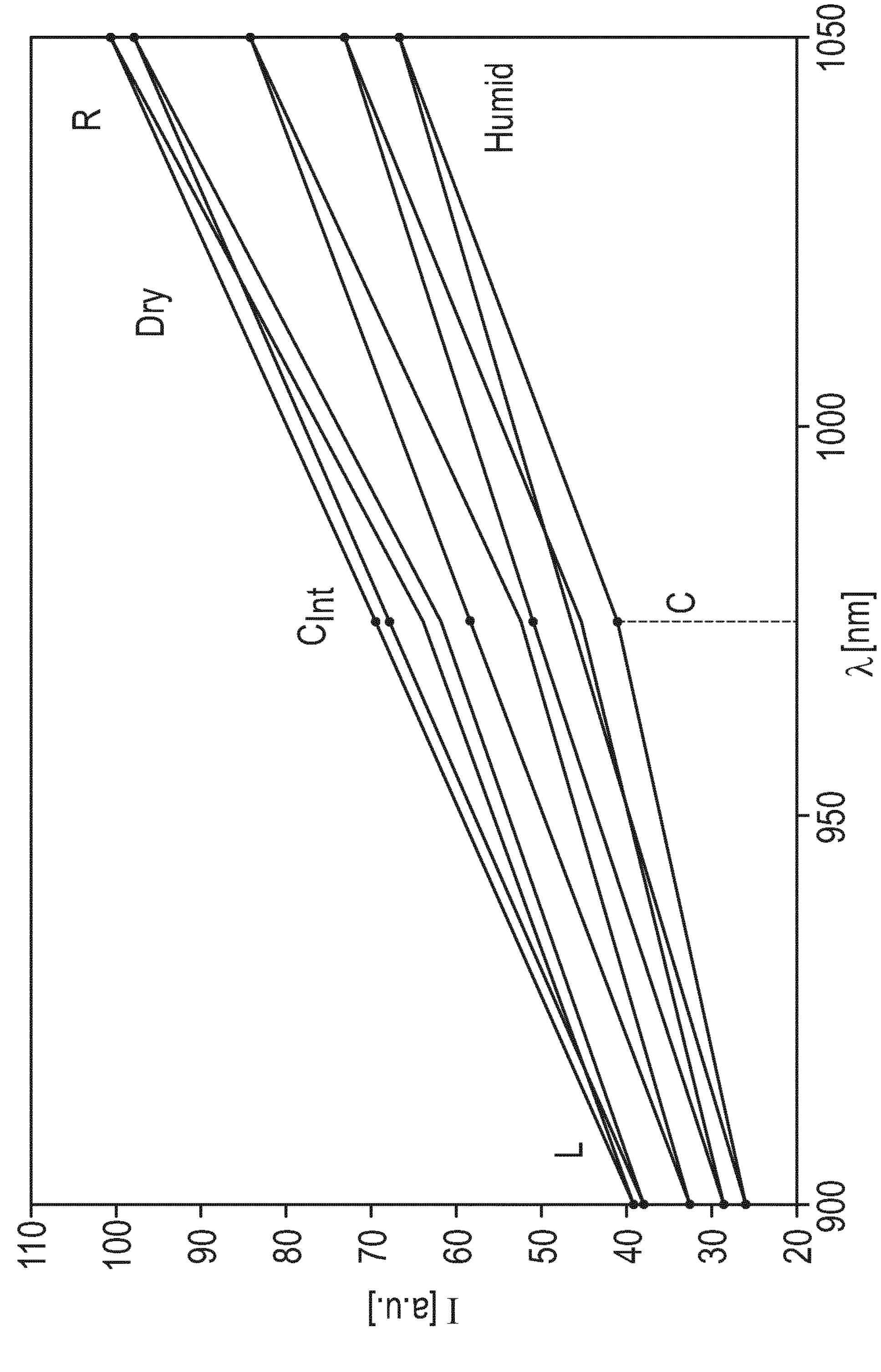
I [a.u.]
110
100
90
80
70
60
50
40
30
20
900
950
1000
1050
λ [nm]
L
C
CInt
Dry
R
Humid

Fig. 6

Fig. 6a

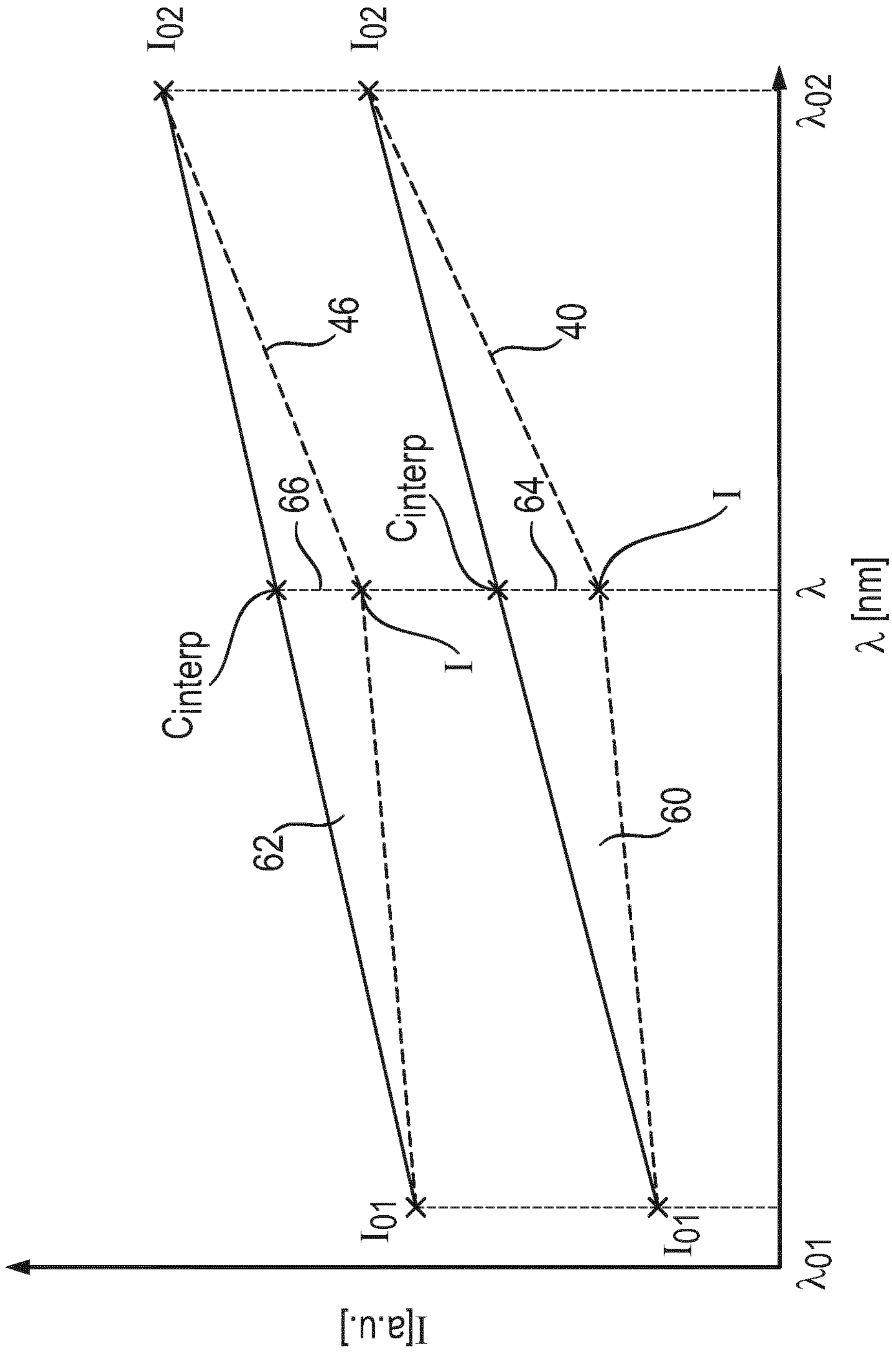
I[a.u.]
λ01
λ02
λ
λ [nm]
I01
I01
I02
I02
Cinterp
Cinterp
I
I
40
46
60
62
64
66

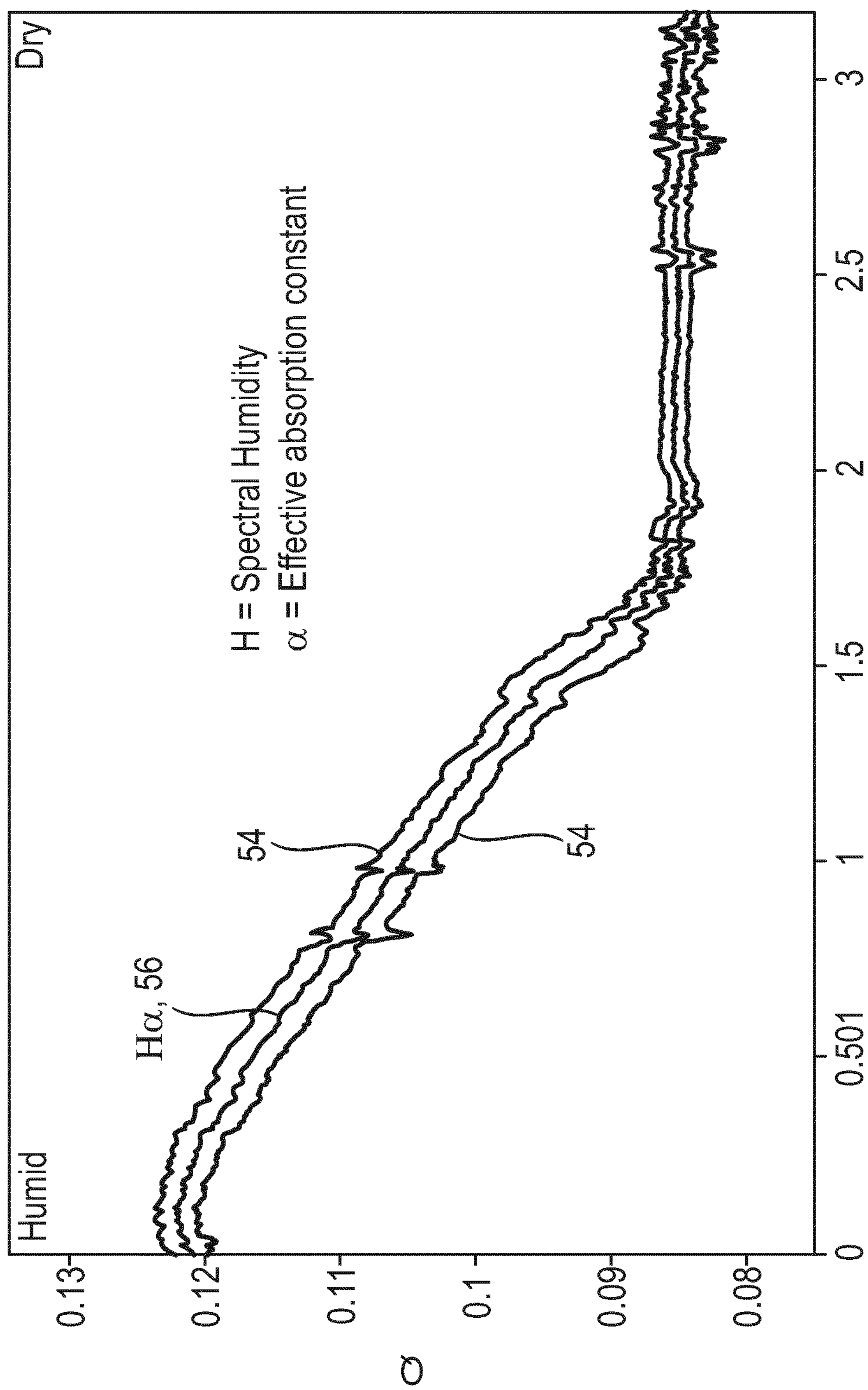
Humid
Dry
H = Spectral Humidity
α = Effective absorption constant
Hα, 56
54
54
0.13
0.12
0.11
0.1
0.09
0.08
σ
0
0.501
1
1.5
2
2.5
3
t

Fig. 7

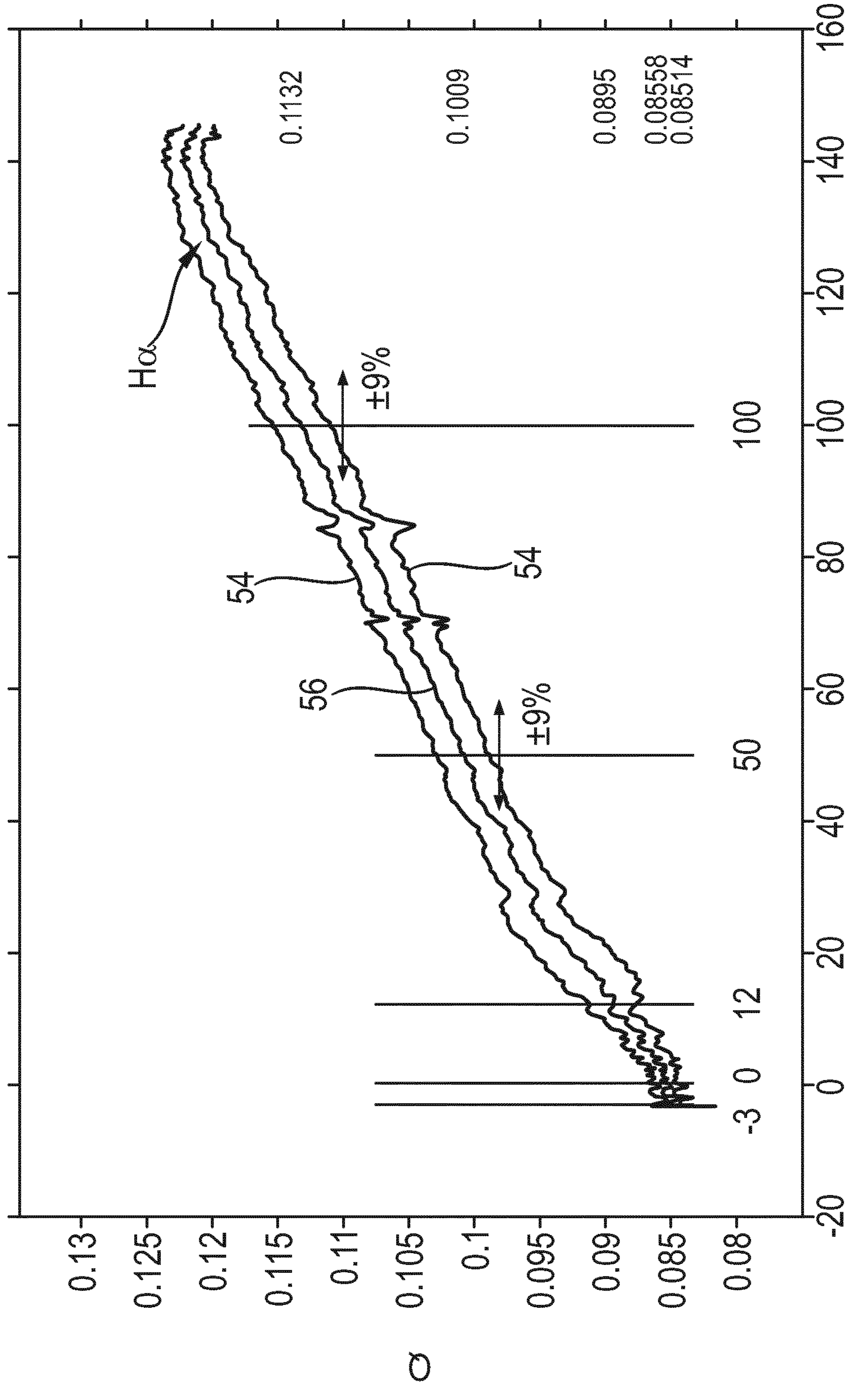
σ
0.13
0.125
0.12
0.115
0.11
0.105
0.1
0.095
0.09
0.085
0.08
H
-20
0
20
40
60
80
100
120
140
160
-3
0
12
50
100
Hα
54
54
56
±9%
±9%
0.1132
0.1009
0.0895
0.08558
0.08514

Fig. 8

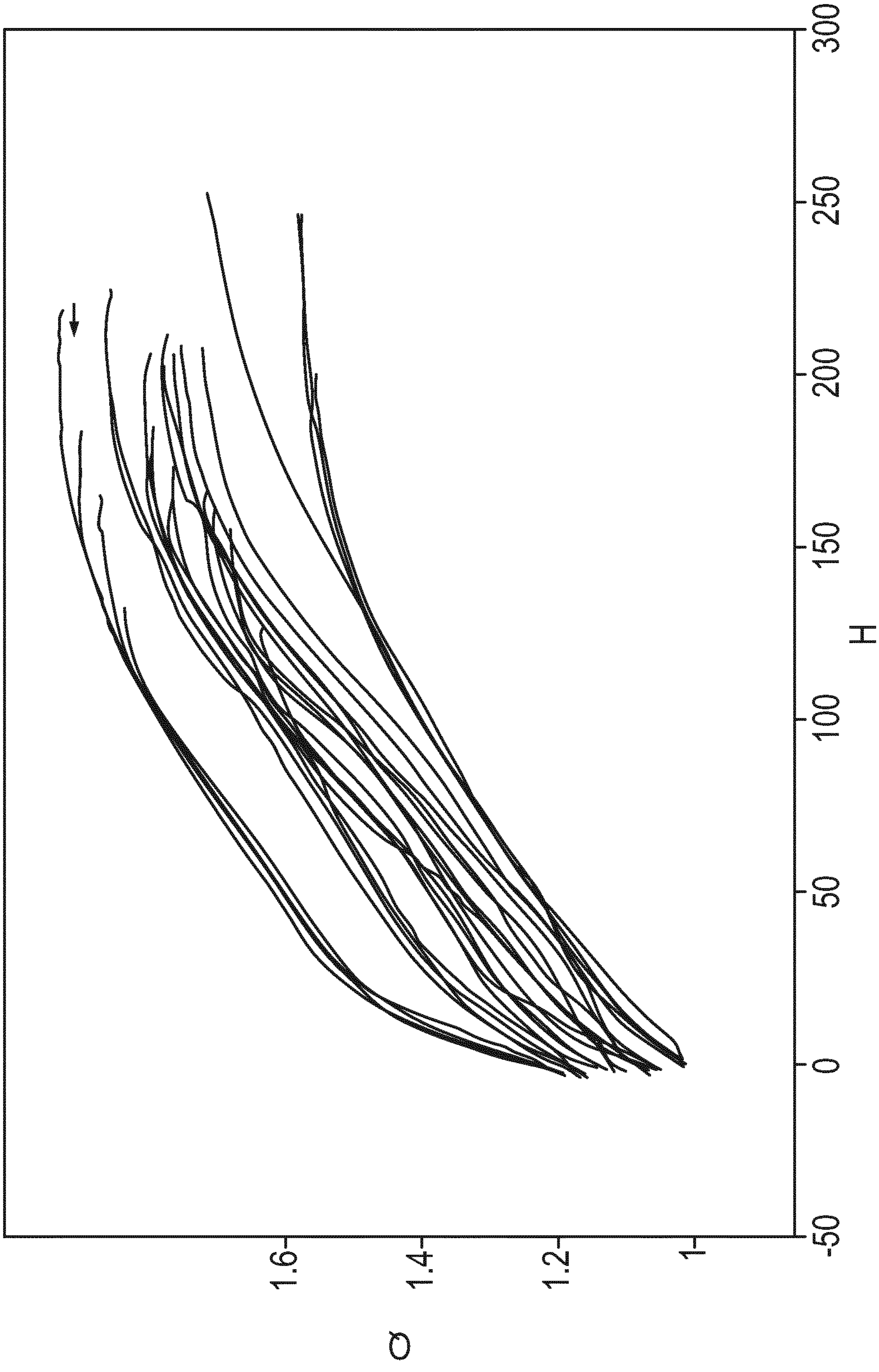


Fig. 9

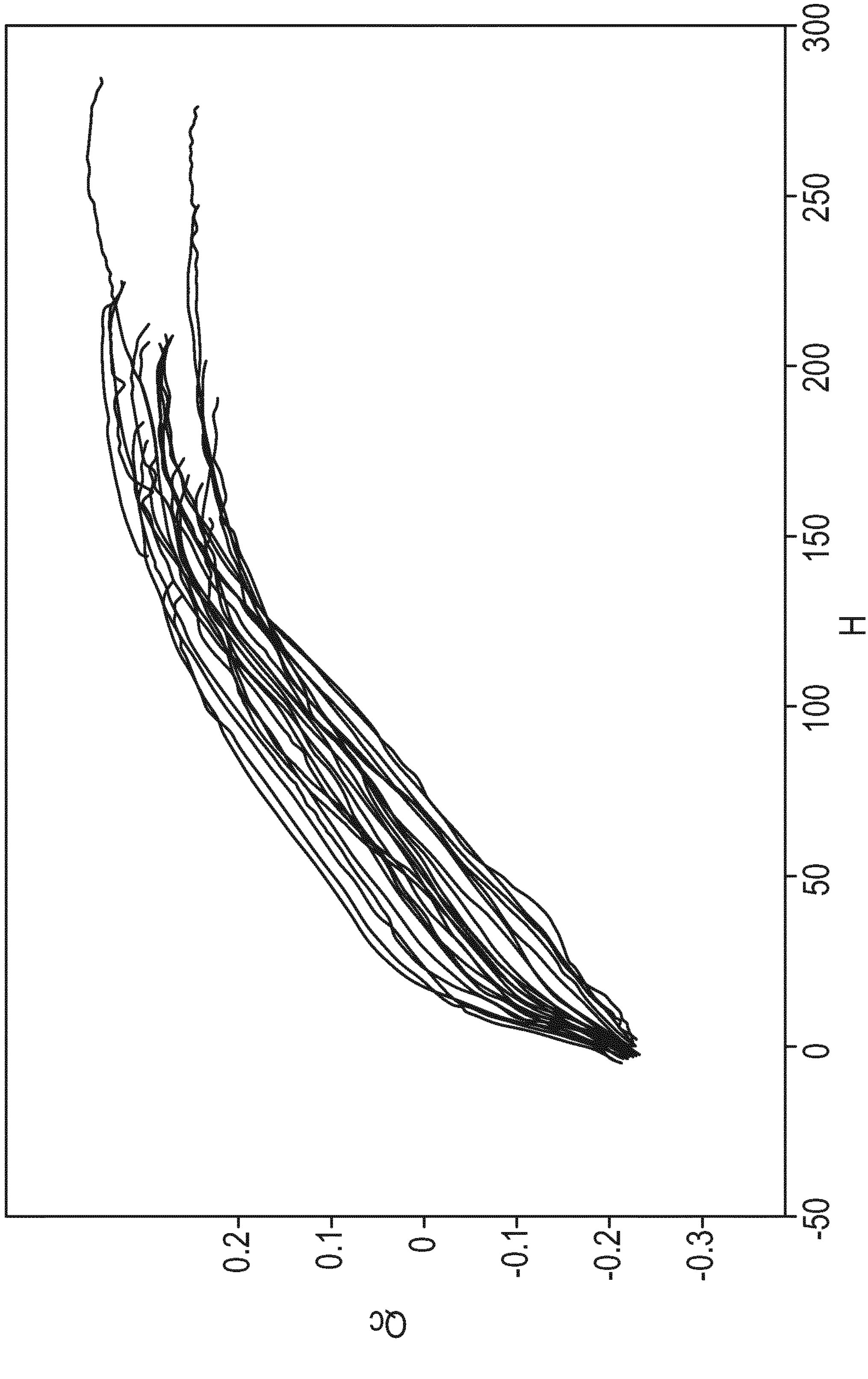


Fig. 10

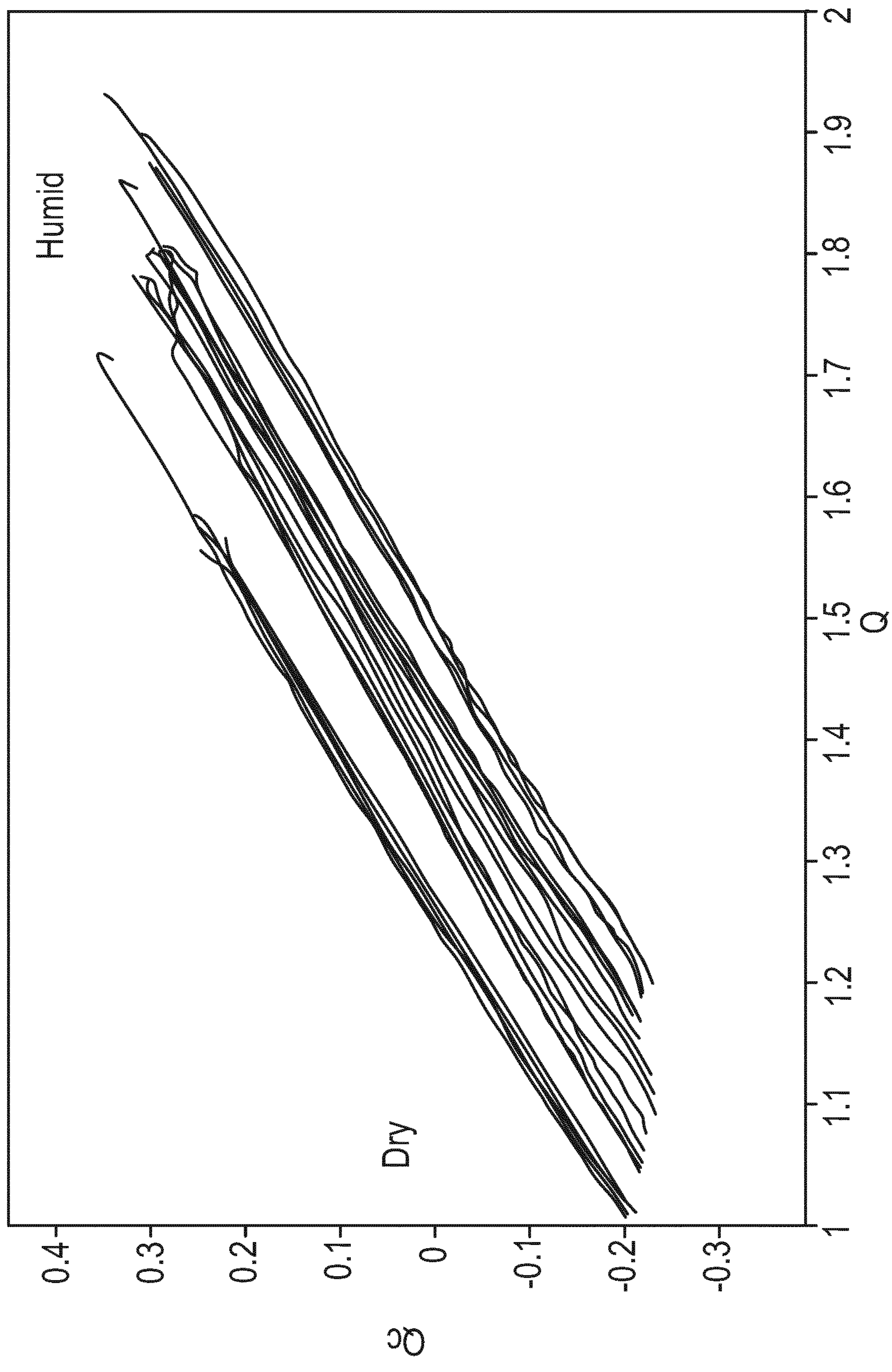


Fig. 11

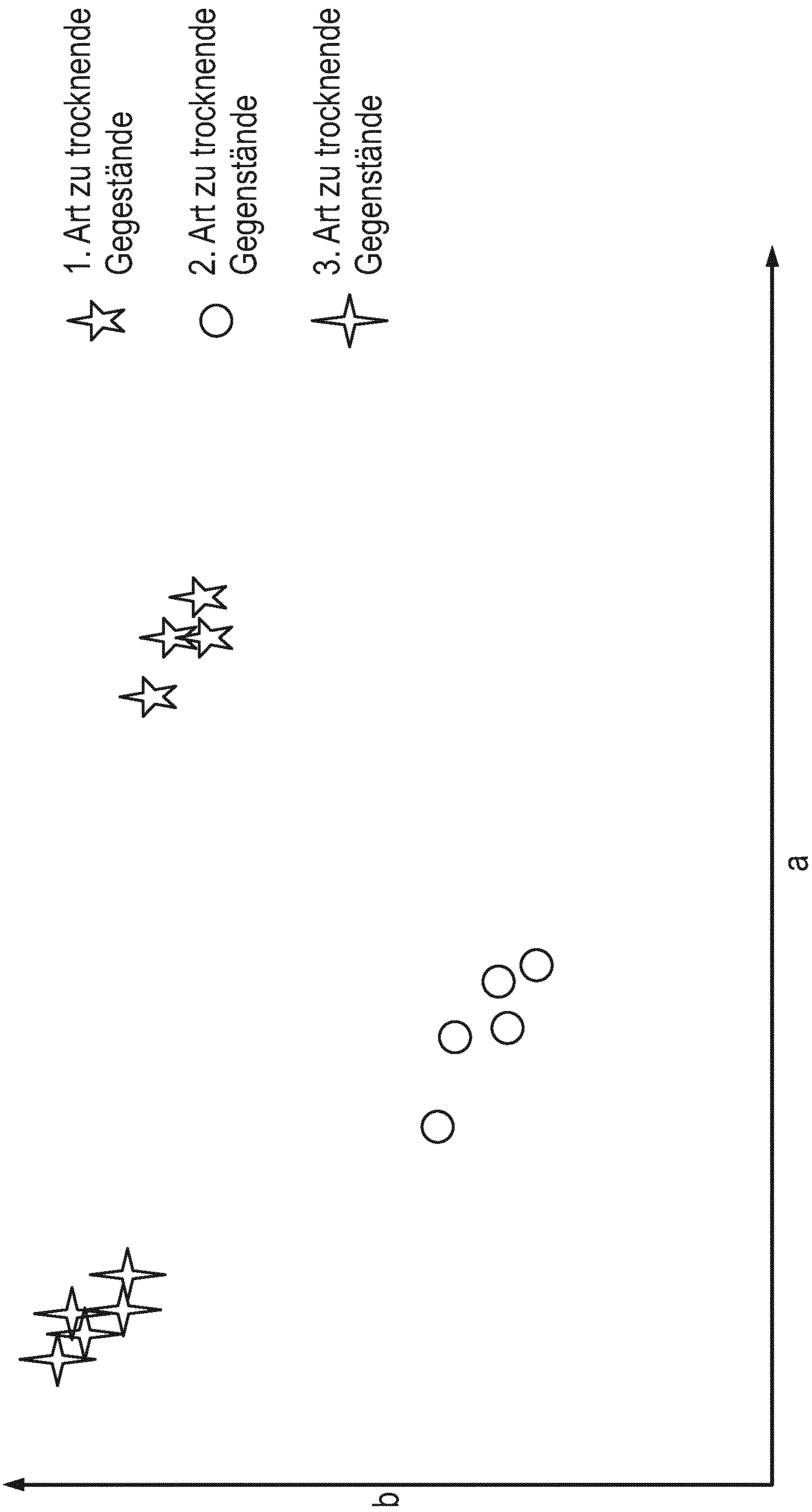
1. Art zu trocknende Gegestände
2. Art zu trocknende Gegenstände
3. Art zu trocknende Gegenstände
a
b

Fig. 12

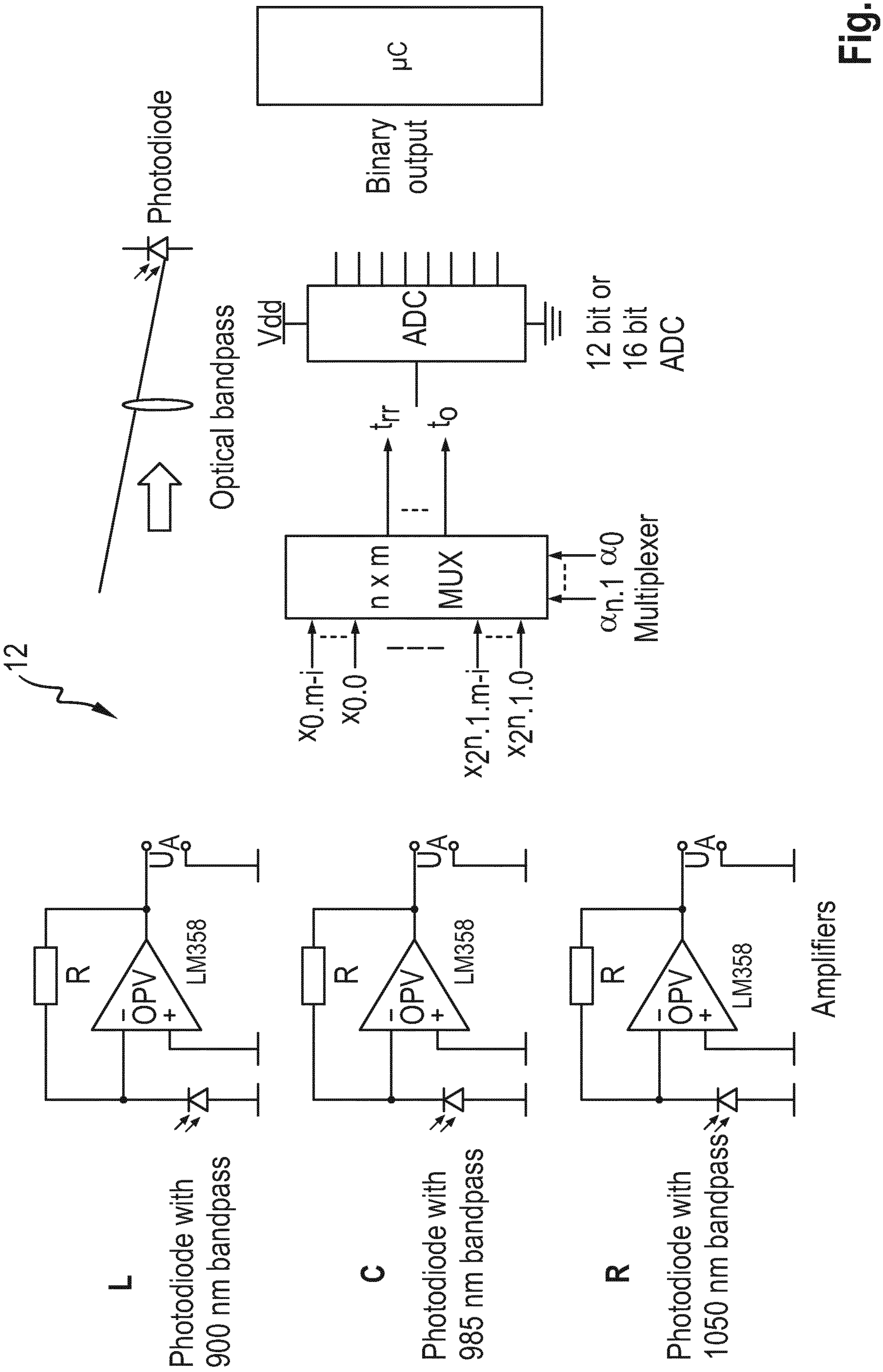
12
Photodiode
Optical bandpass
Vdd
ADC
12 bit or
16 bit
ADC
Binary
output
μC
n x m
MUX
$t_{rr}$
$t_o$
$\alpha_{n.1}$ $\alpha_0$
Multiplexer
$x_{0.m\text{-}i}$
$x_{0.0}$
$x_{2n.1.m\text{-}i}$
$x_{2n.1.0}$
L
Photodiode with
900 nm bandpass
C
Photodiode with
985 nm bandpass
R
Photodiode with
1050 nm bandpass
R
OPV
LM358
UA
Amplifiers

Fig. 13

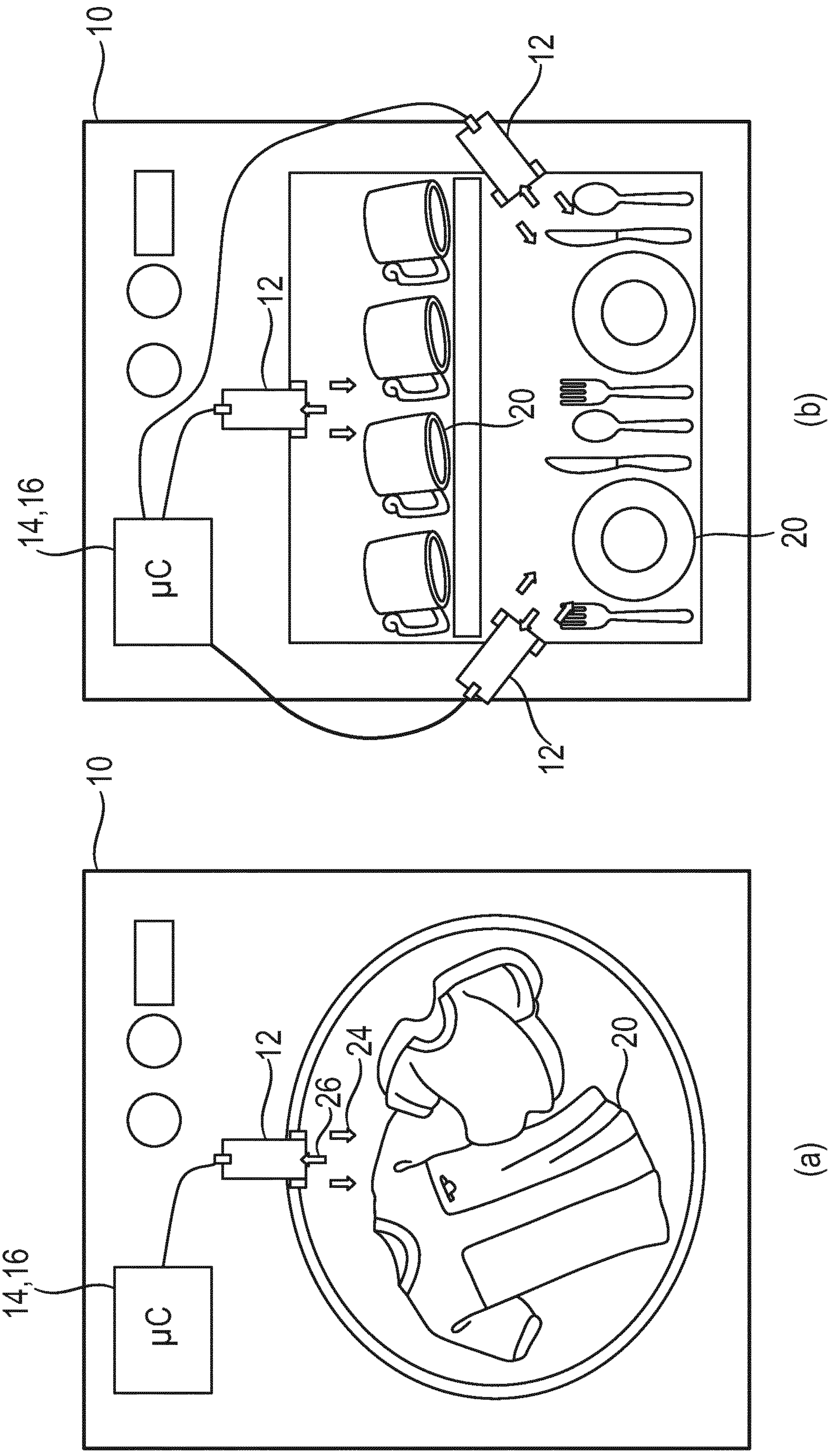


Fig. 14

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102010017232 A1
- WO 2007057360 A1